# EUROPEAN PATENT SPECIFICATION

(11) **EP 4 619 480 B1**
(45) Date of publication and mention of the grant of the patent: **04.03.2026**
(21) Application number: 24714987.5
(22) Date of filing: 20.03.2024
(51) Int. Cl.: C09D 11/326, C08G 18/32, C08G 18/12, C08G 18/75, C09D 175/04, C09D 175/06, C08G 18/08, C08G 18/44, C08G 18/66, C08G 18/42

(54) **AQUEOUS INKJET COMPOSITIONS**
WÄSSRIGE TINTENSTRAHLZUSAMMENSETZUNGEN
COMPOSITIONS AQUEUSES POUR JET D'ENCRE

(30) Priority: 20.03.2023 GB 202304036
(43) Date of publication of application: 24.09.2025
(73) Proprietor: Sun Chemical B.V., 1382 LV Weesp (NL)
(72) Inventor: ILLSLEY, Derek, Norton Bath and North East Somerset BA3 4RT (GB)
(74) Representative: Carpmaels & Ransford LLP
(86) International application number: PCT/GB2024/050750
(87) International publication number: WO 2024/194634

(56) References cited:
- WO-A1-2022/003336
- WO-A2-2007/005808
- JP-A- 2020 138 965

## Description

### FIELD OF THE INVENTION

The present invention relates to compositions comprising polyurethane dispersions. The invention is advantageously directed towards printing inks for inkjet printing.

### BACKGROUND OF THE INVENTION

An issue with conventional PolyUrethane Dispersions ('PUDs'), especially when used in aqueous inks for inkjet printing, is that although they can confer useful print properties such as wet rub resistance, they do not have particularly good resolubility. Resolubility of an ink is its ability to redissolve into itself or a suitable flushing solution when it is partially or fully dried. This is a useful attribute for inkjet printing as it reduces the risk of the nozzles of a printhead becoming blocked and causing printing defects or, in the worst case, the possible catastrophic loss of the printhead itself.

The poor resolubility of inks based on conventional PUDs, as well as compositions comprising hydroxy-functional PUDs (OH-PUDs) and crosslinkers, presents issues for inkjet printing due to the build-up of insoluble residues on the faceplate of the printhead or even within the nozzles and ink supply system of the printhead and surrounding printing apparatus. Even if an ink dries on a faceplate of a printhead, and not within the body of the printhead and ink supply system, this still could be problematic, as printhead faceplates are often coated with Non-Wetting Coatings ('NWCs'), which can be delicate structures comprising thin ceramic layers. To remove insoluble residues from NWCs can damage the coating, having negative consequences for print quality. Thus, to have inks that are readily resoluble is clearly advantageous.

WO2018071858 and associated US11242465 (Sensient Imaging Technologies) relate to inks comprising OH-PUDs with hydroxyl values (OH values), based on the dry polymer weight, of 95 mgKOH/g. To overcome the poor water resistance of the inks, all examples comprise the crosslinker Carbodilite SV-02; a polycarbodiimide type crosslinker. US11242465 includes examples comprising PUDs with OH values of 80 to 200 mgKOH/g. OH-PUDs with OH values of greater than 80 mgKOH/g are used in the preparation of aqueous inkjet compositions in US11242465. Enhancing water resistance of prints made with these compositions required the use of a crosslinker, specifically a polycarbodiimide crosslinker.

The need for a crosslinker to enhance print performance of inks containing OH-PUDs is also demonstrated in US11059992 (Sun Chemical), which relates to a composition comprising the same PUD as US11242465 (i.e., with an OH value of 95 mgKOH/g) along with a crosslinker. Neither US11242465 nor US11059992 discloses or suggests that controlling both PUD molecular weight and OH value within specific ranges and incorporating said PUD into aqueous inkjet (or flexo/gravure) compositions would provide inks with both highly desirable ink resolubility and the ability to produce prints with excellent water resistance. This balance of properties has previously been unachievable without using crosslinking chemistry operatable after printing.

Another prior art approach for enhancing print properties of aqueous compositions comprising OH-PUDs involves blending them with styrene-acrylic dispersions, particularly self-crosslinking styrene-acrylic dispersions (see, e.g., WO2022/079414 (Sun Chemical)). In particular, compositions comprising OH-PUDs with OH values greater than 50 mgKOH/g are blended with the aforementioned styrene-acrylic dispersions to achieve inks having a degree of resolubility but able to produce prints having a degree of water resistance.

WO2022/003336 (Sun Chemical) relates to aqueous inkjet compositions comprising OH-PUDs that are printed over specific primer coatings to control print quality and enable subsequent adhesive lamination, particularly of flexible plastic laminates used in food packaging. The examples of WO2022/003336 comprise OH-PUDs that do not satisfy the requirements of the HO-PUDs for use in the present invention (i.e., OH value = 15 to 50 mgKOH/g; M_{w} = 5,000 to 25,000 Da, and there is no suggestion of the benefits associated with HO-PUDs having such OH values and molecular weights, i.e., the balance of ink resolubility and capacity to produce prints with excellent water resolubility. Indeed, the examples of WO2022/003336 demonstrate that these OH-PUDs do not provide this desirable balance of properties. Indeed, excellent water resistance is very advantageous for surface print applications, including graphics printing, surface print flexible packaging, cartonboard packaging printing, corrugated printing, etc. However, WO2022/003336 relates to prints that were subsequently laminated and thus do not require good water resistance.

OH-PUDs can be provided by a number of methods. For example, US7875355 (Sherwin Williams) relates to the preparation of OH-PUDs having non-terminal hydroxy groups obtained from difunctional amines, such as 1,3-diamino-2-propanol and aminoethylethanolamine. These reagents react to form urea links with isocyanate-functional prepolymers to form OH-PUDs.

A typical method of producing OH-PUDs uses a stoichiometric excess, based on the concentration of hydroxyl to isocyanate groups, of a prepolymer polyol, typically a diol, in a reaction with a diisocyanate or polyisocyanate monomer. US8931889 (DuPont), US7902302 (DuPont), US7902302 (Bayer) relate to the preparation of OH-PUDs using such an excess of polyether and polyester diols.

US7872060, US8563634, US8573762 (Hewlett Packard) relate to PUDs having various molecular weights for use in aqueous inkjet compositions. US7872060 relates to compositions comprising PUDs with weight average molecular weights of 50,000 to 500,000 Daltons. US8563634 relates to aqueous inkjet compositions comprising PUDs with weight average molecular weights of 32,000 to 50,000 Daltons. US8573762 relates to aqueous inkjet compositions comprising PUDs with weight average molecular weights of 20,000 to 50,000 Daltons. The compositions used in US8573762 comprise water-soluble organic solvents with very high boiling points, for example di-(2-hydroxyethyl)-5, 5-dimethylhydantoin, with a boiling point in excess of 350°C.

PUDs are a predominant resin chemistry used in the preparation of pigmented aqueous inkjet printing inks. There are several instances of the use of amino resins, such as melamine-formaldehydes, to crosslink aqueous inkjet printing inks containing PUDs, especially in the printing of textiles. WO2009/137753 (DuPont) relates to PUDs that are crosslinked with Cymel 303, a melamine-formaldehyde crosslinker, at a temperature of 160°C. A number of other documents describe the use of optional crosslinkers in combination with PUDs to improve resistance properties, including WO2019074683 (Eastman Kodak), US20190106587 (Eastman Kodak), US10513622 (Eastman Kodak), JP2002294112(DIC). US9249324 (DuPont), which relate to polyurethane pigment dispersants, usefully lays out the crosslinking possibilities for polyurethanes having any of carboxylic acid, hydroxyl or amine pendant functional groups. Crosslinkers include carbodiimides, epoxies, isocyanates, amino resins (e.g. melamine-formaldehyde), and aziridines.

Another approach to achieving aqueous inkjet compositions having both good resolubility and the capacity to produce prints having excellent water resistance is by using acrylated PolyUrethane Dispersions ('Ac-PUDs') in the preparation of UV-, and EB-curable aqueous inkjet printing compositions. This has been disclosed quite widely, for example in US10076909 (Fujifilm), EP3390545 (Fujifilm), and WO2018138525 (Sun Chemical). The crosslinking of Ac-PUDs is performed using a suitable photoinitiator (in the case of UV-curing). In principle, such compositions will have excellent stability since crosslinking can only be induced in the presence of intense UV light or EB radiation once the ink composition has been partially or fully dried after printing. However, the use of photoinitiators can pose a risk of unwanted migration of low molecular weight compounds from a cured ink, which would be undesirable in many applications, especially the printing of food packaging. Furthermore, Ac-PUDs can be prone to hydrolysis of the acrylate groups, resulting in the liberation of acrylic acid, causing potential pH instability issues, which is again undesirable in inkjet printing.

JP 2020 138965 A relates to a transdermal tape agent in which an adhesive layer is formed on a support, wherein the adhesive layer contains an adhesive (U) and an anesthetic (R) and is not in contact with the support of the adhesive layer. It has a print with the ink composition (Q) on the surface, and when the transdermal tape is applied to the skin and then the tape is peeled off, all or part of this print is transferred to the skin.

WO 2007/005808 A2 relates to a dispersion comprising (a) a hydroxyl-funcational polyurethane resin comprising the reaction product of: (i) an isocyanate pre-polymer intermediate, which comprises the reaction product of an isocyanate and a compound comprising at least one active hydrogen; and (ii) a chain extender compound comprising at least two amine groups and one hydroxyl group, wherein the two amine groups are more reactive with isocyanate than the hydroxyl group; wherein the hydroxyl groups of the hydroxyl-functional polyurethane are positioned on the backbone of the polyurethane; and (b) water.

### Background Documents:

US11242465 (Sensient Imaging Technologies); US11059992 (Sun Chemical); WO2022/079414 (Sun Chemical); US7875355 (Sherwin Williams); US8931889 (DuPont); US7902302 (DuPont); US7902302 (Bayer); US7872060 (Hewlett Packard); US8563634 (Hewlett Packard); US8573762 (Hewlett Packard); WO2009/137753 (DuPont); WO2019074683 (Eastman Kodak); US20190106587 (Eastman Kodak); US10513622 (Eastman Kodak); JP2002294112(DIC); US9249324 (DuPont); US10076909 (Fujifilm); EP3390545 (Fujifilm); WO2018138525 (Sun Chemical).

### SUMMARY OF THE INVENTION

Inventors have found that by controlling both the molecular weight and hydroxy content of the PUD, it is possible to formulate aqueous compositions having a highly desirable balance of ink resolubility whilst being able to deliver prints having excellent water resistance. Clearly for inkjet, this is a significant finding.

The invention is defined by the appended claims. The present invention provides an composition comprising a polyurethane dispersion having a weight average molecular weight of 5,000 to 25,000 Daltons; and a hydroxyl value, based on the dry polymer weight, of 15 to 50 mgKOH/g; wherein the polyurethane of the polyurethane dispersion does not comprise ketone or aldehyde groups at the chain ends.

The present invention further provides a method for printing an article, comprising printing the composition of the invention onto a substrate; and drying the composition.

The present invention further provides a printed article comprising a substrate and a printed layer derived from the composition of the invention.

The present invention further provides a method of preparing an aqueous composition, comprising providing a polyurethane dispersion having a weight average molecular weight of 5,000 to 25,000 Daltons; and a hydroxyl value, based on the dry polymer weight, of 15 to 50 mgKOH/g; wherein the polyurethane of the polyurethane dispersion does not comprise ketone or aldehyde groups at the chain ends; and formulating the polyurethane dispersion into a composition.

The present invention further provides a method of resolubilizing an ink, comprising the steps of providing a dried ink obtained from the composition of the invention; and resolubilizing the ink.

### DETAILED DESCRIPTION

### Definitions

Unless otherwise stated, weight percentages (wt%; w/w) are relative to the total weight of the respective composition.

Inkjet composition - a composition that is suitable for inkjet printing, i.e., suitable for use in an inkjet printer.

Resolubility/redispersibility = an ability of an ink (or other composition) to redissolve into itself or a suitable flushing solution when it is partially or fully dried. In context of the invention, drying is performed at 40 °C (preferably 50°C) for one hour.

Flushing Solution = an aqueous solution comprising an amine and/or inorganic base. OH-PUDs = hydroxyl-functionalised PolyUrethane Dispersion (PUD), a PUD comprising at least one pendant hydroxyl group.

Self-crosslinking polymers. Self-crosslinking polymers contain a functionality which is self-reactive, and thus do not require the use of a separate co-reactant per se. A self-crosslinking polymer is usually in the form of an aqueous dispersion or emulsion and is typically the product of at least two monomers that react with one another. For example, such a polymer may contain both a carbonyl and an amine functional group. There are several mechanisms by which a polymer can be self-crosslinking. Alternatively, or in addition, self-crosslinking polymer emulsions can comprise crosslinkable functional groups attached to the polymer backbone in addition to a crosslinker (i.e. a polyfunctional species that reacts with said crosslinkable functional groups). Typically, in self-crosslinking polymer chemistry, polymers containing ketone groups crosslink at room temperature when combined with bi- or polyfunctional compounds that are reactive towards carbonyl. One example of these reactive compounds is bishydrazides. Such self-crosslinking PUDs are provided as one pack products.

The self-crosslinking reaction may also be initiated by the evaporation of water upon drying, a change of pH of the vehicle, or by curing at elevated temperatures, at which the cross-linking reaction occurs faster, or the reactive groups are de-blocked. Preferably, the self-crosslinking polymers for use in the present invention undergo self-crosslinking at room temperature (e.g. 25 °C). In other words, self-crosslinking polymers and polymer emulsions are species that undergo crosslinking when initiated by one of the above-mentioned methods, but otherwise can be stored long-term in a stable state without undergoing significant crosslinking. Self-crosslinking polymers and polymer emulsions do not require mixing with a crosslinking agent in order to undergo crosslinking. Conventional crosslinkers = a compound that induces crosslinking when added. Solubility is defined as the mass of substance in grams that will dissolve in 100 grams (i.e., 100mL) of water. Thus, 20% (w/w) solubility corresponds to 20g dissolved in 100mL. Unless stated otherwise, solubility is measured at 25 °C. A water soluble organic solvent is an organic solvent that is at least 20% (w/w) soluble/miscible in water. Dispersing agent = a reagent that stabilises a non-soluble solid suspended in a liquid medium, reducing or preventing settling, separation, agglomeration or aggregation. Dispersing agent and dispersant are used interchangeably throughout the application.

Non-ionic dispersing agent = a polymer that stabilises non-soluble solid particles through physical repulsive forces of the polymer chains, as well as osmotic pressure. Non-ionic dispersants adhere to non-soluble solid particles and the polymer chains swell to physically prevent the particles from agglomerating. Examples of non-ionic dispersants include polyethers and other hydrophilic polymers, which swell in aqueous media. Examples also include charged species, for example polyacids and neutralised polyacids such as neutralised polyacrylic acids.

Ionic dispersing agent = charged species that stabilise non-soluble solid particles using electrostatic repulsion. Ionic dispersants adhere to the non-soluble solid particles to form an electric double layer that repels other particles, reducing or preventing agglomeration. In the context of the present invention, an anionic surfactant is an ionic dispersing agent from which a cation has delocalised, leaving a corresponding anion.

As used herein, room temperature is 25 °C.

Boiling point: unless otherwise specified, all boiling points are measured under standard atmospheric pressure of 100 kPa.

### Present Invention

The present invention provides printing compositions having excellent resolubility yet able to produce prints having excellent water resistance, comprising a polyurethane dispersion with a weight average molecular weight of 5,000 to 25,000 Daltons and a hydroxyl value, based on the dry polymer weight, of 15 to 50 mgKOH/g; wherein the polyurethane of the polyurethane dispersion does not comprise ketone or aldehyde groups at the chain ends.

### Polyurethane Dispersion

### OH Value and Weight Average Molecular Weight (M_{w})

PUDs of low molecular weight, especially having weight average molecular weights less than 50,000 Daltons, aid ink resolubility. Thus, the resoluble compositions of the invention are provided by using low molecular weight PUDs. This is contrary to the understanding in the art (see, e.g., US11242465), wherein it is considered that the hydroxyl content of the PUDs alone provides ink resolubility. Thus, the weight average molecular weight of the PUDs for use in the invention is 25,000 Da or less.

The presence of hydroxyl groups on PUDs can reduce the water resistance of dried ink prints. Thus, it is desirable to use a PUD with the lowest OH possible value in order to improve water resistance. To achieve good print water resistance, the OH value should be less than 55 mgKOH/g. However, it has been found that a degree of hydroxyl content on the PUDs promotes long-term stability of PUDs, i.e., incorporating hydroxyl groups can prevent settling or increases in particle size, ensuring good stability of PUDs (and particularly low molecular weight PUDs) and inks formulated therefrom. PUD instability presents itself as phase separation and a significant change in ink viscosity over time (a change of 10% of more is typically considered unacceptable).

Accordingly, low molecular weight PUDs (i.e., having weight average molecular weights of less than 25,000 Daltons) and OH values of less than 15 mgKOH/g have poor stability. A suitable amount of hydroxyl functionality is required to provide stability. In particular, for long-term stability of PUDs of weight average molecular weights of less than 50,000 Daltons (or less than 25,000), the OH value, based on the dry PUD, should be 15 mgKOH/g or greater. Low molecular weight PUDs provide good resolubility but have poor stability in the absence of hydroxyl functionalization. However, too high a hydroxy content reduces the print's water resistance. Balancing these properties through controlling the molecular weight and hydroxyl content is fundamental to the present invention.

Accordingly, to achieve a balance of resolubility and print resistance, the PUDs for use in the invention have an OH value, based on the dry polymer, of 15 to 50 mgKOH/g and a weight average molecular weight (M_{w}) of 5,000 to 25,000 Daltons. The weight average molecular weight is measured by Gel Permeation Chromatography (GPC - see Test Methods). The required OH values ensure both stability and the best possible water resistance of ink prints comprising the PUDs for use in the invention. The aqueous printing inks also have excellent resolubility/redispersibility.

The PUD for use in the invention preferably have a weight average molecular weight of 5,000 to 20,000 Da, more preferably 5,000 to 16,000 Da, such as 8,000 to 16,000 Da, or 5,000 to 10,000 Da. The PUD for use in the invention may also preferably have a weight average molecular weight of 10,000 to 25,000 Da, more preferably 15,000 to 25,000 Da, such as 20,000 to 25,000 Da.

The PUDs for use in the invention preferably have a OH value of 16 to 50mg KOH/g or 20 to 50 mgKOH/g, more preferably 20 to 40 mg KOH/g, and even more preferably 30 to 40 mgKOH/g, or 30 to 35 mgKOH/g.

Inks comprising the OH-PUDs for use in the invention are resoluble in the wet ink itself or an aqueous flushing solution comprising a base, such as an amine. Therefore, if the ink does dry in the printhead, it can redissolve (or redisperse) so that it does not block the printhead. However, inks comprising the OH-PUDs for use in the invention that are printed onto a substrate and dried do not then redissolve into water, thus providing the required water resistance. Both the molecular weight and hydroxy content of the PUDs for use in the invention provide inks with these properties. Accordingly, the present invention provides the use of the compositions of the invention for reducing blockages in a printhead used in printing. The reduction is blockages is relative to a comparative ink comprising a PUD that does not satisfy the requirements of the HO-PUD for use in the invention. A blockage is identified as the reduction in flow rate through a print nozzle and/or the inability of a print nozzle to dispense an ink. By "used in printing", it is meant the standard operation of a printing press.

In contrast, inks prepared from conventional PUDs (i.e., PUDs having molecular weights / OH numbers outside that required by the invention, and especially those having molecular weights greater than 50,000 Daltons) may produce prints with acceptable water resistance, but will have very poor resolubility. The examples demonstrate how inks prepared from the OH-PUDs for use in the invention produce prints having comparable, if not better, water resistance than conventional, commercially available PUDs.

The prior art discussed herein does not teach to balance both OH number and weight average molecular weight in the manner of the present invention, to deliver inks having both good resolubility and able to produce prints with excellent water resistance. Aqueous ink (e.g. inkjet) compositions comprising the OH-PUDs for use in the invention show significant advantages over the prior art.

Conventional PUDs, such as PUDs with zero hydroxyl content and weight average molecular weights of 50,000 Daltons or greater, provide aqueous inkjet ink compositions that, when dried at temperatures up to 40°C for between 15 and 60 minutes, become largely insoluble in both the ink itself or a flushing solution (i.e., are not resoluble). OH-PUDs having OH values of greater than 50 mgKOH/g can produce inks with excellent resolubility/redispersibility but produce dried prints with poor water resistance. OH-PUDs with OH values of less than 50 mgKOH/g, and with weight average molecular weights of 50,000 Daltons or greater also provide inks with poor resolubility. The present invention addresses these issues.

The OH-PUDs for use in the invention have a weight average molecular weight of 5,000 to 25,000 Daltons and preferably an OH value of 22 to 40 mg KOH/g. The OH-PUDs for use in the invention more preferably have a weight average molecular weight of 8,000 to 16,000 Daltons and an OH value of 25 to 35 mg KOH/g.

### PUD Stabilization

The OH-PUDs for use in the invention may be anionically or non-ionically stabilized, or a combination of the two stabilization mechanisms. Anionically stabilized HO-PUDs are preferred.

Where PUDs comprising acid groups are use in the invention, there is no restriction on the acid value of the PUD. Anionically stabilized PUDs for use in the invention preferably have acid values, based on the dry polymer weight, of at least 10 mgKOH/g, or more preferably at least 20 mgKOH/g. The acid value of the PUDs for use in the invention may preferably be from 0 to 100 mgKOH/g, based on the dry polymer weight of the PUD, or more preferably from 10 to 50 mgKOH/g.

Anionically stabilized PUDs comprise acid groups as part of the polymeric structure, which after neutralization with a suitable base, provide anionic stabilization, which enables aqueous dispersion. Anionic PUDs can be produced by including carboxylic acid group into the polymer structure of the PUD, for example, by the urethane reaction of carboxylic acid containing diols, such as dimethylol propionic acid ('DMPA'). Other diol reagents comprising one or more carboxylic acid groups may be used in the preparation of the PUDs, as well as other acid-bearing reagents and other acids, such as sulphonic acid, to provide PUDs, such as those derived from a polyester prepolymer diol comprising a monomer comprising sulphonic acid
The OH-PUDs used in the compositions of the invention are preferably anionic in nature, in that they comprise carboxylic acid groups. This is typically achieved by incorporating into PUD manufacture a diol comprising at least one carboxylic acid, such as DMPA.

Anionically stabilized PUDs are preferred for use in the invention, as it has been found that inks having low amounts of non-ionic pigment dispersants provide prints with the best water-resistance. Non-ionic dispersants include non-ionic surfactants such as ethoxylated alcohols and non-ionic PUDs. Accordingly, preferably non-ionic PUDs comprise 30wt% or less of the total PUDs present in the compositions of the invention, more preferably non-ionic PUDs comprise 15wt% or less of the total PUDs present in the compositions of the invention.

Non-ionically stabilized PUDs comprise a hydrophilic segment (such as a poly(ethylene oxide)) incorporated to the polyurethane dispersion to enable dispersion.

The PUDs for use in the present invention may also be formed from difunctional amines and thus comprise urea linkages in the polyurethane backbone. This may further increase print resistance properties. The OH-PUD for use in the invention may comprise at least one urea linkage, such as at least two urea linkages, or at least four urea linkages.

### Bases

Wherein an acid, e.g., a pendant carboxylic acid, such as that derived from DMPA, or another acid-containing species, is incorporated into the PUD, it may be neutralized with a suitable base, including any organic or inorganic base, to enable anionic stabilization. Dispersing anionic PUDs with any suitable base enables the PUD to be dispersed in water. Non-limiting examples of bases that can be used to neutralize the carboxylic acid (or other acids) of the PUDs include: tertiary amines, such as triethylamine (TEA), N,N-dimethylethanolamine (DMEA), any another tertiary amine, and inorganic bases, such as potassium hydroxide, sodium hydroxide, and combinations thereof. Especially preferred are DMEA and TEA.

To stabilize the PUD, the carboxylic acid groups are neutralized with a base, such as N,N-dimethylethanolamine (DMEA), triethylamine (TEA), or an inorganic base, such as potassium hydroxide. The base used to neutralize the carboxylic acid groups of the PUD are preferably tertiary amines (e.g., triethylamine and/or N,N-dimethylethanolamine) having a boiling point of 200°C or less, such as 150°C or less, more preferably 125°C or less, and even more preferably 100°C or less.

Preferably, organic amines are used as neutralizing bases to neutralize the carboxylic acid groups of the PUD in the preparation of the PUDs for use in the invention, and more preferably tertiary amines.

The PUDs may be neutralized with a tertiary amine that is not TEA.

### Diols

The OH-PUD used in the inventive compositions can be derived from various prepolymer diols used in the polyurethane manufacture.

The OH-PUDs for use in the invention may be aromatic and/or aliphatic PUDs. OH-PUDs for use in the invention may thus be produced from any aliphatic or aromatic diol, including polyether diols, polyester diols, polyacrylic diols, polycarbonate diols, and blends or hybrids thereof. Polycarbonate diols are an advantageous class of prepolymer diol used in the preparation of the PUDs for use in the invention. Preferred are polyester diols and polycarbonate diols. The PUDs of the invention are especially preferably produced using polycarbonate diols. It has been found that inks comprising PUDs using a polycarbonate diol have reduced tack and better block resistance than PUDs using a polyester diol in the manufacture.

### Isocyanates

The OH-PUDs for use in the invention may be prepared using polyisocyanates, such as any diisocyanate. Diisocyanates used in the preparation of the OH-PUDs for use in the invention may be aliphatic or aromatic types including, but not limited to, isophorone diisocyanate, hexamethylene-1,6-diisocyanate, tetramethylxylylene diisocyanate, methylene diphenyl diisocyanate, hydrogenated methylene diphenyl diisocyanate, toluene diisocyanate, and combinations thereof. In the preparation of the polyurethane precursor, an excess of diisocyanate is used compared with the diol to leave the isocyanate functional prepolymer ready for end-capping with the hydroxyl-functional reagent. In particular, during chain extension, the NCO-terminated prepolymer is dispersed into an aqueous phase and a chain terminating agent is used to moderate the molecular weight. Typical chain extenders include diamines and diols. To limit the molecular weight, a monofunctional amine or alcohol can be used to endcap the prepolymer. In the present case, monofunctional alcohol-containing amines, such as ethanolamine or diethanolamine, may be used as end-capping reagents, either as the sole reagent used during chain extension phase or as part of a blend further comprising difunctional amines (or alcohols), to provide further control of final PUD molecular weight.

The OH-PUD for use in the invention may preferably be derived from a monofunctional alcohol-containing amine such as ethanolamine or diethanolamine.

### PUD Particle Size

There is no restriction on the particle size of the PUD used in the preparation of the compositions of the invention. However, it is preferable that the average particle size should be less than 250nm, or more preferably less than 100nm.

### Linear or Branched PUDs

The OH-PUDs for use in the invention may be linear. The invention also encompasses compositions comprising branched OH-PUDs. Approaches for preparing branched PUDs are well known in the art, for example, by using trifunctional isocyanates (e.g. biuret HMDI trimers), trifunctional or higher functional polyols, or trifunctional or higher functional primary and secondary amines.

### Other Properties of the PUDs For Use in the Invention

### Resolubility

Incorporating OH-PUDs having the molecular weight and hydroxyl content required by the invention into aqueous compositions provides resolubility/redispersibility properties to the inks, which is especially useful for aqueous inkjet printing inks. Resolubility/redispersibility, in the context of this invention and inkjet more broadly, is the ability of an ink, after drying at temperatures of up to 40°C, and preferably 50°C, for up to one hour, to re-dissolve or redisperse into itself or a suitable 'flushing' solution. This resolubility of the compositions of the invention thus makes them particularly suitable for use in inkjet printing.

In contrast, inks of the art comprising conventional PUDs, conventional self-crosslinking PUDs, and/or styrene-acrylics have poor resolubility.

Flushing solutions include aqueous solutions comprising an amine and/or inorganic base. The compositions of the invention advantageous redissolve or redisperse into such solutions and yet do not redissolve into water (i.e., they provide prints with water resistance). Flushing solutions further include aqueous solutions comprising amines and/or inorganic bases where the pH has been buffered to less than 9.0. The flushing solution may comprise 0.01 to 2wt% amine and/or inorganic base, such as 0.1 to 0.3 wt% amine and/or inorganic base. The amine may be triethanolamine.

The resolubility of the compositions of the invention into such flushing solutions is advantageous, as inkjet printheads can comprise non-wetting coatings on faceplates, which are prepared using sol-gel chemistry. These sol-gel coatings are derived from silanes and are prone to hydrolysis under highly alkaline or highly acidic conditions, resulting in degradation of the faceplate coating and subsequent loss of the non-wetting function. Accordingly, the flushing solution for use in the invention preferably has a pH of 4.0 to 9.0.

The flushing solution may be an aqueous solution comprising between 1 and 50wt% of a glycol, such as propylene glycol, such as 10 and 30 wt%, glycol and 0.01 to 1 wt% amine or inorganic base, such as 0.01 to 1 wt% triethanolamine.

### Ink Solids Content, Viscosity, pH

The total solids content of the compositions of the invention may be 5 to 50wt%, preferably 6 to 40wt%, or more preferably 8 to 25wt%.

There is no restriction on the total solids content contributed by the PUD to the final aqueous (inkjet) printing ink composition. However, it is preferred that the total solid content contributed by the OH-PUD to the final ink formulation should be in the range of 2.0% (w/w) to 40% (w/w), more preferably 2.5% (w/w) to 20.0% (w/w), and even more preferably 5.0% (w/w) to 20.0% (w/w) of the final ink composition for ink compositions, based on the dry polymer weight.

Where the compositions of the invention are intended for inkjet printing, they preferably have viscosities, at 32°C, of less than 10.0 mPa.s.

The pH of the compositions of the invention is preferably in the range 5.0 to 10.0, and more preferably 6.0 to 9.5.

### Optional Components of the Compositions

### Crosslinkers

Inks comprising the OH-PUDs for use in the present invention deliver prints with excellent water resistance, which is improved relative to inks comprising commercially available OH-PUDs, as well as inks comprising OH-PUDs and polycarbodiimide crosslinkers (see, e.g., WO2018071858). The presence of polycarbodiimide crosslinkers can negatively impact ink resolubility of compositions comprising OH-PUDs. The prior art inks thus may achieve resolubility through incorporation of OH-PUDs, including OH-PUDs with OH values of 55 mgKOH/g or greater. But to achieve satisfactory print resistance incorporation of a crosslinker (polycarbodiimide) is required. However, it has been found that such crosslinkers can have a significant negative impact on ink resolubility. Furthermore, these inks of the prior art do not provide the same water resistance as achieved with the compositions of the invention.

Accordingly, the compositions of the invention preferably comprise 5wt% or less of conventional crosslinkers, such as polycarbodiimides. The compositions of the invention more preferably comprise 3wt% or less of conventional crosslinkers, such as polycarbodiimides, and even more preferably 1wt% or less of conventional crosslinkers. The compositions of the invention may be substantially free of conventional crosslinkers, such as carbodiimides, oxazolines such as polyoxazolines, aziridines such as polyaziridines, epoxies, amino resins (such as melamine-formaldehydes), metal complexes (including titanate and zirconate organometallics, such as ammonium zirconium carbonate), isocyanates (including blocked isocyanates), and epoxides.

Consequently, the invention provides resoluble inks with the capacity to produce prints having excellent water resolubility without the necessity for incorporating additional crosslinkers and/or co-resins, such as a styrene-acrylic dispersion. Although, the present invention does not exclude the optional presence of such crosslinkers and co-resins. By using OH-PUDs as required by the present invention, aqueous ink compositions are provided having both excellent resolubility and print water resistance, a desirable combination of properties, whereas the use of crosslinkers and/or co-resins enhances print water resistance at the expense of ink resolubility.

Nevertheless, the compositions of the invention may optionally comprise an additional crosslinker, including carbodiimides, oxazolines such as polyoxazolines, aziridines such as polyaziridines, epoxies, amino resins (such as melamine-formaldehydes), metal complexes (including titanate and zirconate organometallics, such as ammonium zirconium carbonate), isocyanates (including blocked isocyanates), and epoxides. Preferred are carbodiimides, oxazolines, amino resins (such as melamine-formaldehyde), epoxies, silanes, and combinations thereof.

As discussed, any conventional crosslinker that is incorporated into the compositions of the invention is done so in a small amount, so as to not adversely affect resolubility, such as 5wt% or less. Preferably, no conventional crosslinker is incorporated into the inventive compositions, to any avoid risk of the inks curing in an inkjet printhead and irreversibly blocking a portion of the printhead nozzles.

### Water-soluble Organic co-Solvent

High-boiling (e.g., involatile) solvents are typically incorporated into inkjet printing inks of the art at concentrations of more than 35% (w/w) of the ink to raise the viscosity of the ink and ensure that the ink has acceptable resolubility. However, incorporating high boiling point solvents is disadvantageous as it slows the drying times of the inks, which is undesirable for high throughput printing. Thus, while high boiling point co-solvents may be incorporated into the inventive compositions, it is preferable to prepare inkjet inks with lower amounts of high-boiling point solvents.

By controlling the molecular weight and OH value of the OH-PUDs for use in the invention, the compositions of the invention balance resolubility and print water (wet rub) resistance, even for inventive compositions comprising low concentrations of high boiling point co-solvents, such as glycerol. Indeed, excellent resolubility can be achieved while incorporating minimal high boiling point solvents (i.e., 35wt% or less), such as solvents with a boiling point in excess of 250°C, and solvents with a boiling point in excess of 200°C.

The compositions of the invention preferably comprise 35wt% or less of any solvent having a boiling point of 200°C or greater, such as 30wt% or less, 20wt% or less, or 10wt% or less of any solvent having a boiling point of 200°C or greater. The compositions of the invention more preferably comprise 30% or less of any solvent having a boiling point of 150°C or greater, such as 20% or less, or more preferably 10% or less of any solvent having a boiling point of 150°C or greater.

The compositions of the invention are preferably free of solvents having a boiling point of 350 °C or greater.

When a water-soluble organic solvent is incorporated into the compositions of the invention, it preferably has a boiling point of less than 250°C, and more preferably less than 200°C. Where solvents with boiling points of greater than 200°C are used, their concentration in the compositions of the invention is preferably less than 10.0% (w/w), or more preferably less than 5.0% (w/w).

Moreover, the concentration of organic water-soluble co-solvents, having heats of vaporization of 500 J/g or greater and boiling points greater than 150°C is preferably less than 30%, and more preferably 25% (w/w) or less of the total ink composition. Where such co-solvents are used, the total amount of solvents having boiling points of greater than 200°C is preferably less than 10% (w/w) of the ink composition. The concentration of water-soluble solvents having heats of vaporization of greater than 500 J/g is preferably less than 30% (w/w), more preferably 20wt% or less.

The inventive inks maintain good resolubility/redispersibility when comprising propylene glycol concentrations as low as 5.0% (w/w) of the ink composition. Thus, the compositions of the invention preferably comprise 25wt% or less of propylene glycol, and more preferably 15wt% or less of propylene glycol.

Aqueous inkjet inks of the art typically comprise organic co-solvents at concentrations in excess of 35% (w/w) of the ink composition. However, the compositions of the invention can be prepared with solvent concentrations of less than 40% (w/w). The total concentration of water-soluble organic solvents in the resoluble compositions of the invention is preferably less than 35.0% (w/w), more preferably less than 30.0% (w/w) of the ink composition, and even more preferably 25% (w/w) or less.

Moreover, the compositions of the invention have excellent resolubility without having to use water-soluble organic co-solvents having boiling points of greater than 200°C and/or heats of vaporization of 500 J/g, or greater. Ink compositions of the invention having excellent resolubility can instead be prepared comprising water-soluble organic co-solvents with boiling points of less than 200°C. Ink compositions of the invention having excellent resolubility can also be prepared comprising water-soluble organic co-solvents with boiling points of less than 200°C and heats of vaporization of less than 500 J/g.

For example, the compositions of the invention preferably comprise 3-methoxy-3-methyl-1-butanol ('MMB'). Preferably, such water-soluble organic co-solvents are incorporated in amounts of up to 30 wt%, such as up to 20wt%. MMB is a preferred co-solvent as its heat of vaporization is 385 J/g, significantly lower than that of propylene glycol found in inks of the art, which is in excess of 700 J/g. Moreover, the boiling points of MMB is 175°C, close to the 187°C boiling point of propylene glycol.

The compositions of the invention, after drying, are resoluble/redispersible in the ink itself or an aqueous solution comprising an amine or other basic material, without the need to comprise high concentrations of high boiling point solvents, such as propylene glycol, glycerol, and diethylene glycol. The compositions of the invention can thus be prepared with lower concentrations of such water-soluble co-solvents, whilst maintaining the desired resolubility, resulting in inks for inkjet printing with a faster drying response.

Faster drying facilitates the use of the compositions of the invention in high throughput industrial inkjet printing markets, such as packaging, corrugated, label printing, and textiles, etc. Furthermore, a faster drying response reduces the energy input required in drying. This is beneficial in both the aforementioned printing markets and the multi-pass inkjet graphics printing market, the latter of which largely uses UV-curable and solvent-based compositions. There are growing concerns relating to the health and safety of UV-curable compositions due to new information concerning the toxicity of the monomers and photoinitiators used in their preparation. The present invention can also address these issues.

Solvent-based inkjet printing ink compositions typically comprise more than 70% organic solvent blends. In contrast, the compositions of the invention comprise water as the major solvent. Moreover, the OH-PUDs for use in the invention are polymeric and thus pose a much lower health risk than the monomers and photoinitiators found in UV-curable inkjet printing ink compositions. Finally, solvents derived from renewable sources, such as propylene glycol, may also be used in the inventive compositions.

The incorporation of some water-soluble organic co-solvents into the inventive compositions may be required to facilitate their use in high-throughput inkjet printing processes, such as single-pass printing of flexible packaging, single-pass printing of cartonboard packaging, single-pass printing of corrugated packaging, and the multi-pass printing of graphics.

The compositions of the invention optionally comprise any water-soluble organic co-solvent as previously described. Volatile solvents, such as ethanol, propanol and isopropanol may be incorporated into the compositions of the invention. However, for inks intended for inkjet printing it is preferably that solvents that are neither highly flammable nor volatile are used, including a polyol, an alkylene glycol, an alkylene glycol ether, an ether acetate, and combinations thereof.

Non-limiting examples of organic co-solvents for use in the invention include: 4-hydroxy-4-methyl-2-pentanone, diethyelene glycol, diethylene glycol butyl ether, diethylene glycol ethyl ether, diethylene glycol methyl ether, diethylene glycol monoethyl ether acetate, diethylene glycol monopropyl ether, dipropylene glycol, dipropylene glycol ethyl ether, dipropylene glycol methyl ether, ethylene glycol butyl ether, ethylene glycol ethyl ether, ethylene glycol isopropyl ether, ethylene glycol methyl ether, ethylene glycol propyl ether, glycerine carbonate, N-methyl 2-pyrrolidone, glycerol, propylene glycol, propylene glycol ethyl ether, propylene glycol ethyl ether acetate, propylene glycol methyl ether, propylene glycol n-propyl ether, triethylene glycol, triethylene glycol butyl ether, triethylene glycol methyl ether, tripropylene glycol, tripropylene glycol methyl ether, N-methyl pyrrolidone, urea, and combinations thereof and the like.

### Other Resins

The compositions of the invention may include a further water-soluble, alkali-soluble or water-dispersible resin, in addition to the OH-PUD for use in the invention.

Additional resins for use in the invention include, but are not limited to: polyurethane dispersions, self-crosslinking polyurethane dispersions, alkali-soluble acrylics, acrylic dispersions, self-crosslinking acrylic dispersions, polyester dispersions, poly(vinyl acetate) and copolymers of vinyl acetate dispersions, poly(vinyl alcohols), poly(vinyl pyrrolidones), and combinations thereof. Thus, the compositions of the invention may include additional resins, wherein such modifications fall within the scope of the invention.

There is no restriction on the total amount of additional resin binder that can be incorporated into the compositions of the invention. When present, the additional resin binder is preferably present in the range of 2.5% (w/w) to 40.0% (w/w), more preferably 2.5% (w/w) to 30.0% (w/w) of the total dry combined weight of the PUD and any other resin. The additional resin binder is preferably present in the range of 0.5% (w/w) to 15.0% (w/w) solids, more preferably 1% (w/w) to 10.0% (w/w) solids, and even more preferably 2% to 7% (w/w) solids, relative to the total weight of the composition.

The OH-PUDs for use in the invention preferably makes up at least 50wt% of the total resins present in the compositions of the invention, based on the dry weight. The OH-PUDs for use in the invention more preferably make up at least 70wt%, such as at least 80wt%, or even more preferably at least 90 wt% of the total resins present in the compositions of the invention, based on the dry weight. The OH-PUDs for the use in the invention may be the only resins present in the compositions of the invention. In other words, the compositions of the invention may comprise 20wt% or less of one or more additional (to the OH-PUD) resins, such as styrene-acrylic resins, based on the dry weight. The compositions of the invention may comprise 10wt% or less of one or more additional (to the OH-PUD) resins, such as 5wt% or less, based on the dry weight, or be substantially free of additional resins.

### Surfactants and Dispersants

Dispersion of the OH-PUDs for use in the invention may be further promoted by the incorporation of anionic and/or non-ionic surfactants into the compositions of the invention.

Examples of surfactants for incorporation into the pigment dispersion for use in the invention include, but are not limited to, anionic surfactants such as alkane sulphonates, alpha-olefin sulphonates, alkyl benzene sulphonates, alkyl naphthalene sulphonates, acyl methyl taurinates, dialkyl sulfosuccinates, alkyl sulfates, sulfurized olefins, polyoxyethylene alkyl ether phosphates, polycarboxylic acids and mono glycerol phosphate, amphoteric surfactants such as alkylpyridinium salts and non-ionic surfactants such as polyoxyethylene alkyl ethers, polyoxyethylene alkyl phenyl ethers, polyoxyethylene alkyl esters, polyoxyethylene alkyl amides, glycerol alkyl esters and sorbitan alkyl esters and non-ionic polyurethane dispersions, and combinations thereof.

Examples include EFKA 1000, 4000, 5000 and 6000 series products from BASF, Tamol series products from Dow, and Solsperse 27,000, 40,000, 44,000, 46,000 and 47,000 from Lubrizol.

The invention may incorporate pigment dispersions comprising anionic dispersants and/or dispersants comprising non-ionic groups, such as poly(ethylene oxide), as part of their chemical structure, to produce compositions having excellent resolubility and the capacity to produce prints with excellent water (wet rub) resistance.

The compositions of the invention are advantageously prepared with anionic pigment dispersions, such as alkali-soluble styrene-(meth)acrylic copolymers comprising carboxylic acid groups derived from monomers including, but not limited to: (meth)acrylic acid, itaconic acid, maleic acid, maleic anhydride. Neutralizing the carboxylic acid groups of these anionic dispersants enables them to from aqueous solutions suited for dispersing a range of organic and inorganic pigments. Suitable anionic polymeric dispersants that are preferably incorporated into the compositions of the invention further include copolymers of styrene and maleic anhydride and particularly those neutralized with an amine, such as 2-amino-2-methyl-1-propanol (AMP) or ammonia.

Dispersants are preferably incorporated into the compositions of the invention at a weight ratio to the pigment of 0.05:1 to 0.5:1, based on the dry weight of the dispersant. When included in the compositions of the invention, pigments are preferably incorporated in 0.1 to 15wt%, more preferably 1 to 10wt%, and even more preferably 2 to 8% (w/w), based on the total ink. Thus, dispersants are preferably incorporated into the compositions of the invention in amounts of 0.005 to 7.5wt%, more preferably 0.05 to 5wt%, and even more preferably 0.1wt% to 4wt%, based on the total weight of the composition.

Dispersants comprising non-ionic groups are innately water-sensitive and thus can produce inks with poorer water resistance. Therefore, it is advantageous that the pigment dispersion used in the invention are prepared using polymeric anionic dispersants and especially those of the styrene-(meth)acrylate-(meth)acrylic acid copolymer type.

Inkjet compositions having the highest water resistance thus comprise pigment dispersions with no, or a limited amount of, non-ionic dispersants and dispersants comprising non-ionic groups, such as poly(ethylene glycol) as part of their structure.

Non-ionic dispersants include non-ionic surfactants, such as ethoxylated alcohols and non-ionic PUDs, including non-ionic OH-PUDs for use in the invention. The compositions of the invention preferably comprise 20wt% or less of non-ionic dispersants, more preferably 10wt% or less of non-ionic dispersants, more preferably 5wt% or less of non-ionic dispersants, or even more preferably 2wt% or less of non-ionic dispersants, based on the dry weight of the dispersants. The compositions of the invention may be substantially free of non-ionic dispersants.

The pigment dispersion for use in the invention preferably comprises 30wt% or less of non-ionic dispersants, more preferably 20wt% or less, even more preferably 10wt% or less of non-ionic dispersants, relative to the total dispersants present in the pigment dispersion.

In other words, the pigment dispersion for use in the invention preferably comprises at least 70wt% anionic pigment dispersants, more preferably at least 80wt%, even more preferably at least 90wt%, and most preferably at least 95wt% anionic pigment dispersants, relative to the total pigment dispersants present in the pigment dispersion.

### Biocide and/or Anti-Mould Agents

The compositions of the invention are water-based. Therefore, it is advantageous to include a biocide or anti-mold agent. Suitable examples include products based on, but not limited to, the following biocide structural types: benz-isothiazolinone, bromo-nitro-propane-diol, isothiazolinone, ethylenedioxydimethanol, or iodo-propynyl butyl carbamate. Some commercially available grades include those marketed under the trade names Intercide (Akcros Chemicals) or Nipacide (Clariant). Other types of biocide that could be considered include sodium dehydroacetate (Geogard 111S from Lonza), sodium benzoate (Vancide 51 from R. T. VANDERBILT), sodium pyridinethiol- 1-oxide (Sodium Omadine from Arch Chemicals), sodium salt of o-phenylphenol (Dowicide A from DOW Chemical) and ethyl p-hydroxybenzoate (Nipastat Sodium from Aako).

Biocide and/or anti-mould agents are preferably incorporated in an amount of 0.01 to 1.00% by mass of the composition.

### Defoamers

Defoamers can optionally be included in the compositions of the invention to prevent the formation of foam during manufacture and while jetting. Defoamers are particularly important for inks used with recirculating printheads.

Examples of suitable defoamers include, but are not limited to: TEGO FOAMEX N, FOAMEX 1488, 1495, 3062, 7447, 800, 8030, 805, 8050, 810, 815N, 822, 825, 830, 831, 835, 840, 842, 843, 845, 855, 860, and 883, TEGO FOAMEX K3, TEGO FOAMEX K7/K8 and TEGO TWIN 4000 available from Evonik. Available from BYK are BYK-066N, 088, 055, 057, 1790, 020, BYK-A 530, 067A, and BYK 354. The additives DC62, DC65, DC 68, DC71 and DC74 are available from Dow Corning. Agitan 120, 150, 160, 271, 290, 298, 299, 350, 351, 731, 760, 761, and 777 are available from Munzing. Surfynol 104PA, AD01, DF-110, DF-58, DF-62, DF-66, DF-695, DF-70, and MD-20 are available from Air Products.

When included in the compositions of the invention, defoamers are preferably incorporated in amounts of 1.0wt% or less, more preferably 0.5wt% or less, and even more preferably 0.2wt% or less.

### Surface Control Additives

Surface control additives are optionally used to control the surface tension of the ink, to adjust the wetting on the face plate of the printhead and also give the desired wetting on the substrates onto which the inks are printed. Surface control additives can also be used to control the level of slip and scratch resistance.

Examples of suitable surface control additives for use with the present invention include, but are not limited to: TEGO FLOW 300, 370, and 425, TEGO GLIDE 100, 110, 130, 406, 410, 411, 415, 420, 432, 435, 440, 482, A115, and B1484, TEGO GLIDE ZG 400, TEGO TWIN 4000 and 4100, TEGO WET 240, 250, 260, 265, 270, 280, 500, 505, and 510 and TEGO WET KL245, all available from Evonik. Available from BYK are BYK 333 and 337, BYK 378, 347 and 361, CERAFLOUR 998 and 996, NANOBYK 3601, 3610, and 3650, and CERMAT 258. Surfynol 104, 420, 440, 465, 485, 61, 82, and 2502 are available from Air Products. Multiwet BD, EF, SU, SO, and VE are available from Croda. Capstone FS-30, 31, 34, 35, 50, 51, 60, 61, 63, 64, 65, and 3100 are available from Du Pont.

When included in the compositions of the invention, surface control additives are preferably incorporated in amounts of 2.0wt% or less, more preferably 1.5wt% or less, and even more preferably 1.0wt% or less.

### De-Aerator

Optionally included in the compositions of the invention is a suitable de-aerator. De-aerators prevent the formation of air inclusions and pinholes in the cured ink film. De-aerators also reduce rectified diffusion, which can cause reliability issues in the printhead. Non-limiting examples of de-aerators for use in the invention include the 'Agitan^{™}' range available from Munzing,

When included in the compositions of the invention, de-aerators are preferably incorporated in amounts of 2.0wt% or less, more preferably 1.0wt% or less, and even more preferably 0.5wt% or less.

### Colorants

The compositions of the invention may optionally contain one or more colorants, including pigments and/or dyes.

Examples of suitable organic or inorganic pigments for use in the invention include carbon black, zinc oxide, titanium dioxide, phthalocyanine, anthraquinones, perylenes, carbazoles, monoazo and disazobenzimidazoles, rhodamines, indigoids, quinacridones, diazopyranthrones, dinitroanilines, pyrazoles, diazopyranthrones, pyrazoles, dianisidines, pyranthrones, tetracholoroisoindolines, dioxazines, monoazoacrylides, anthrapyrimidines, and combinations thereof. The dyes for use in the invention include but are not limited to azo dyes, anthraquinone dyes, xanthene dyes, azine dyes, combinations thereof, and the like.

Commercial organic pigments classified according to Color Index International may be used, including, but not limited to, those according to the following trade designations: blue pigments PB1, PB15, PB15:1, PB15:2, PB15:3, PB15:4, PB15:6, PB16, PB60; brown pigments PB5, PB23, and PB265; green pigments PG1, PG7, PG10 and PG36; yellow pigments PY3, PY14, PY16, PY17, PY24, PY65, PY73, PY74 PY83, PY95, PY97, PY108, PY109, PY110, PY113, PY128, PY129, PY138, PY139, PY150, PY151, PY154, PY156, PY175, PY180 and PY213; orange pigments PO5, PO15, PO16, PO31, PO34, PO36, PO43, PO48, PO51, PO60, PO61 and PO71; red pigments PR4, PR5, PR7, PR9, PR22, PR23, PR48, PR48:2, PR49, PR112, PR122, PR123, PR149, PR166, PR168, PR170, PR177, PR179, PR190, PR202, PR206, PR207, PR224 and PR254: violet pigments PV19, PV23, PV32, PV37 and PV42; black pigments PBk1, PBk6, PBk7, PBk8, PBk9, PBk10, PBk11, PBk12, PBk13, PBk14, PBk17, PBk18, PBk19, PBk22, PBk23, PBk24, PBk25, PBk26, PBk27, PBk28, PBk29, PBk30, PBk31, PBk32, PBk33, PBk34, PBk35, NBk1, NBk2, NBk3, NBk4, NBk6; combinations thereof, and the like.

The pigments for use in the invention are typically milled to an average particle size of less than 1 micrometer with a particle size distribution of 10-500 nm, or 10-350 nm, in order to have better transparency and a wide color gamut.

To incorporate the above pigments to the inventive compositions, it is advantageous that the pigments are manufactured and stably stored as a pigment concentrate in water. This is typically achieved by dispersing the pigment into a water-soluble or water-dispersible resin using a water-soluble and/or a water-dispersible surfactant that introduces hydrophilic functional groups into the surface of the pigment particles.

Examples of these dispersing resins for use in the invention are numerous and include polyvinyl alcohols, non-ionic polyurethane dispersions, polyacrylic acid, acrylic acid-acrylonitrile copolymers, vinyl acetate-acrylate copolymers, acrylic acid-acrylate copolymers, styrene-acrylic acid copolymers, styrene-methacrylic acid copolymers, styrene-methacrylic acid-acrylate copolymers, styrene-alpha methyl styrene-acrylic acid copolymers, styrene-alpha methyl styrene-acrylic acid-acrylate copolymers, styrene-maleic acid copolymers, styrene-maleic anhydride copolymers, vinyl naphthalene-acrylic acid copolymers, vinyl naphthalene-maleic acid copolymers, vinyl acetate-maleate copolymers, vinyl acetate-crotonic acid copolymers, and vinyl acetate-acrylic acid copolymers, and the salts thereof. The copolymers can be used in any form of random copolymer, block copolymer, alternating copolymer and graft copolymer.

Examples of resins include Joncryl 67, 674, 678, 8500, 586, 611, 680, 682, 683 and 69 available from BASF. These resins are commonly neutralized with ammonia to enable the preparation of polymer solutions. It is also possible to neutralize such resins with any other organic amine, or an inorganic base. Pigment dispersions prepared using styrene-(meth)acrylate-(meth)acrylic acid type copolymers and copolymers of styrene and maleic anhydride (or acid) are particularly preferred pigment dispersions for use in the inventive compositions.

When included in the compositions of the invention, pigments are preferably incorporated in amounts of 0.1 to 15wt%, more preferably 1 to 10wt%, and even more preferably 2 to 8wt%. When included in the compositions of the invention, dyes are preferably incorporated in amounts of 0.1 to 15wt%, more preferably 0.2 to 10wt%, and even more preferably 0.5 to 8wt%.

### Adipic Dihydrazide

The compositions of the invention preferably comprise less than 20wt% adipic dihydrazide, more preferably less than 10wt%, even more preferably less than 5wt%, and even more preferably less than 1wt% adipic dihydrazide relative to the total weight of the composition. The compositions of the invention may be substantially free of adipic dihydrazide.

### Amounts

The OH-PUD for use in the invention may be incorporated into the compositions of the invention in an amount of 10 to 50wt%, preferably 15 to 40wt%, and more preferably 20 to 35wt%. The OH-PUD for use in the invention may be incorporated into the compositions of the invention in an amount of 1 to 25wt% polyurethane solids, preferably 2 to 18wt% polyurethane solids, and more preferably 5 to 15wt% polyurethane solids.

The water content of the compositions of the invention may be 10 to 80wt%, preferably 20 to 70wt%, and more preferably 40 to 65wt%. The total solvent content (including water) of the compositions of the invention may be from 20 to 92 wt%, preferably 40 to 90wt%, and more preferably 50 to 85wt%.

### Method of Making the PUDS for Use in the Invention

There is no restriction on how the OH-PUDs for use in the invention are prepared, beyond what has previously been described herein. Indeed, there is no restriction on how the OH-PUDs for use in the invention are prepared provided they meet the requirements for OH value and weight-average molecular weight.

### Method of Printing

The compositions of the invention can be used in a method of printing. A further advantage of the inks of the invention having good resolubility and the capacity to produce prints with excellent water resistance is that they can be used in a range of applications. Methods of printing encompassed by the invention include the printing of flexible packaging (surface print and reverse print), the printing of coated metal substrates (metal decoration), the printing of cartonboard packaging, the printing of textiles and graphics printing.

The excellent water resistance of prints achievable with this technology makes it suitable for surface print applications without the need of an overprint varnish. Furthermore, since resoluble/redispersible inks can be produced with concentrations of co-solvents, such as propylene glycol of 25% or less, the ink composition will allow high speed printing of these inks, including multi-pass and single pass inkjet printing.

The printing inks are most advantageously printed via inkjet printing processes and may be used in the printing of flexible packaging, cartonboard (and corrugated) packaging, metal packaging, textiles printing, décor printing and graphics printing.

The compositions of the invention may also be used in applications including packaging printing (e.g., on flexible, cartonboard, and corrugated packaging), metal decoration printing (including metal can packaging), textiles printing, and décor printing.

Printing methods covered by the invention also include multi-pass printing of textiles including cotton-rich fabrics, single-pass printing of textiles, multi-pass printing of packaging such as cartonboard, single pass printing of packaging such as labels, corrugated, cartonboard and flexible packaging, and single pass and multi-pass printing of metal substrates including the metal decoration of cans and décor printing.

The compositions of the invention are ideally suited for use in multi-pass graphics printing. For graphics printing, the inventive compositions may be printed onto any flexible or rigid substrate including, but not limited to: paper, vinyl, acrylic, polystyrene, polycarbonate, metals, etc. In particular, the compositions of the invention have excellent performance on vinyl, acrylic, and polycarbonate substrates, as used in the multi-pass inkjet graphics market. Although directed to inkjet compositions, the compositions of the invention may also be used as aqueous flexographic and/or gravure inks.

### Pinning

The invention also encompasses use of infrared pinning to control print quality. Infrared pinning can be used instead of fixative containing primers. Infrared pinning partially dries the ink shortly after jetting onto the substrate, yet prior to the final full drying station. By partially drying the ink, its viscosity is raised, thereby reducing the potential for the ink to spread and cause print quality issues such as dot gain, line spread and intercolor bleed.

Ideally, infrared pinning occurs shortly after the ink has been jetted and preferably within 2 seconds of jetting. Infrared pinning (partial drying) of the aqueous compositions of the invention can be achieved using Near Infrared LED lamps, such as those provided by Phoseon.

### Use of Primers

The printing of the inventive compositions may be preceded by the application of a print-receptive primer to the substrate to be printed.

For inkjet printing, the inkjet compositions of the invention may be printed onto any substrate that has previously been pre-coated with a suitable primer composition, in order to enhance print quality. Such primers typically comprise a multivalent metal salt which helps to 'fix' the ink, reducing print quality issues such as drop spread and intercolor bleed. Primers are not essential to the invention but can optionally be used and any suitable primer that enhances the print quality achievable with the inventive inks may be used with the invention.

There is no restriction on the use of, or type of primer composition, but those comprising a multivalent salt, such as calcium chloride, calcium acetate, magnesium chloride, magnesium acetate, aluminum sulphate, etc. may be used. Primers comprising cationic polymers, such as cationic polyurethane and cationic styrene-(meth)acrylate dispersions may also be used. Primers comprising anionic polymers such as solution acrylics and styrene-(meth)acrylate dispersions may be used. Primers comprising amino acids may also be used with the invention. Such primers work with compositions of the invention by helping to 'fix' the print design, reducing issues such as dot gain, line spread, inter-color bleed, mottle and graininess. Various types of primer and their use in the control of the print quality of pigmented aqueous inkjet printing inks are known in the art. The compositions of the invention may be printed onto substrates that have been pre-coated with such primers.

### Substrates and Substrate Pretreatment

Suitable substrates to be printed upon using the compositions of the invention include packaging substrates such as polyester films, polypropylene films, nylon films, cellulose acetate films, polyethylene films, aluminium foils, metal sheets and rolls and any coated derivative thereof.

The substrates to be printed, such as packaging substrates such as polyester films, polypropylene films, nylon films, cellulose acetate films, polyethylene films, aluminum foils, metal sheets and rolls and any coated derivative thereof, may also be further treated prior to printing via corona discharge or plasma treatments in order to enhance the ink adhesion and print receptivity.

The printed material may also be subject to further operations to realize a final product, including over-lacquering, and lamination, etc. For the packaging market, the printing compositions of the invention can be used in the preparation of laminates, where the laminates are produced by adhesive or thermal lamination processes. The skilled person is aware of these processes and how they can enable the compositions of the invention to be used the aforementioned markets.

### EXAMPLES

### Test Methods and Definitions

Hydroxyl Value (OHV): This is defined as the number of milligrams of potassium hydroxide required to neutralize the acetic acid taken up on acetylation of one gram of a chemical substance that contains free hydroxyl groups. The hydroxyl value is measured in accordance with the ISO 4629-1:2016(E).

Acid Value (AV): The mass of potassium hydroxide (KOH) in milligrams that is required to neutralize one gram of chemical substance. Unless stated otherwise, reference to the acid value is to the total acid value and is suitably measured in accordance with ISO 2114:2000(E) (method B) standard.

### Molecular weight of non-polymeric or non-oligomeric compounds

The molecular weight of non-polymeric or oligomeric compounds is defined and calculated by the molecular structure of the compound. Usually, this is given by the supplier technical data sheet of the compound or can be found on the webpage of the European Chemical Agency (ECHA).

Molecular weight of polymeric and oligomeric compounds (Daltons): References to both number average molecular weight and weight average molecular weight are made throughout and the ways of determining these values clearly described. Molecular weights are determined (including for the PUDs) using Gel Permeation Chromatography (GPC). The molecular weight is measured by comparison with a monodisperse polystyrene equivalent molecular weight calibration standard. Molecular weight determination is conducted on a Hewlett-Packard 1050 Series HPLC system equipped with two GPC Ultrastyragel columns, 103 and 104 Å (5 µm mixed, 300 mm x 19 mm, Waters Millipore Corporation, Milford, MA, USA) and THF as mobile phase. The flow rate in the columns is 1.0 ml/min, column temperature: 40°C, a differential refractive index detector (RI) and a UV-detector (254nm) were used. The dispersibility DISP = (Mw/Mn) is the quotient of molecular weight average and number average and was calculated from the measurement results. Unless otherwise stated, the molecular weight of polymeric and oligomeric compounds is the weight average molecular weight.

The skilled person will appreciate that this definition of molecular weight applies to polymeric materials which typically have a molecular weight distribution.

The Heat of Vaporization: The amount of energy (enthalpy) that must be added to a liquid substance to transform a quantity of that substance into a gas. For the purposes of the present disclosure, the enthalpy of vaporization is given at the normal boiling temperature of the substance in questions, wherein the normal boiling temperature is the boiling point of a substance at one atmosphere pressure.

Particle size/average particle size. In the context of the present invention, the terms "particle size" or "average particle size" refer to the volume distributed median particle diameter (equivalent spherical diameter corresponding to 50% of the volume of all the particles, read on the cumulative distribution curve relating volume % to the diameter of the particles - often referred to as the "D(v,0.5)" value). Particle size may be measured by laser light diffraction.

Viscosity of the inks was measured at 32°C using a Brookfield DV-II+ Pro Viscometer equipped with Spindle no.18, at 100rpm.

### Resolubility Testing:

What follows is a brief description of the tests that the inventor has used in assessing the resolubility of inkjet inks. Approximately 60µm ink layers were applied onto glass slides using a No.6 K-Bar (ex. RK Print). The ink film was then dried at 40°C for 30 minutes. The dried ink was then immersed in an aqueous mixture comprising 25% (w/w) propylene glycol, 0.2% Tegowet KL245 (surfactant, ex. Evonik) and 0.1% (w/w) of triethanolamine, the rest being deionised water. This solution is a good simulation of the ink varnish. The inventor has also shown that inkjet inks prepared with PUDs are resoluble in their varnish, that is the ink composition where the pigment dispersion was substituted with water. In the tests described later, a highly resoluble ink will rapidly redissolve/redisperse into the immersion fluid, typically within 2 to 5 minutes, whereas an insoluble ink would fail to redisperse in soaking solution within 60 minutes of immersion.

Approximately 60µm ink films were applied to glass slides using a No. 6 K-Bar applicator (ex. RK Print). The inks were then dried for 30 minutes at 40°C, before being immersed in an aqueous solution comprising 25% propylene glycol, 0.2% Tegowet KL245 and 0.1% of triethanolamine ('Solution A'). Resolubility was also assessed in a similar solution but only comprising 0.2% triethanolamine ('Solution B'). Resolubility was also assessed in deionized water ('Solution C'). Resolubility was assessed as follows:
'Highly Resoluble' (the dried ink film dispersed in the soaking fluid in less than 3 minutes, with no visible signs of any undissolved ink)
'Resoluble' (the dried ink film dispersed in the soaking fluid in 3 to 5 minutes, with no visible signs of any undissolved ink)
'Slowly Resoluble' (the dried ink film dispersed in the soaking fluid within 30 minutes, with no visible signs of any undissolved ink)
'Partially Resoluble' (the dried ink film disperses in the soaking fluid within 30 minutes, with visible signs of undissolved ink)
'Insoluble (the dried ink film shows little visible evidence of dispersing in the soaking fluid within 30 minutes).

Note: for Solution C (deionized water), it is advantageous that the compositions of the present invention are insoluble as they are required to have water resistance.

pH:Unless stated otherwise, pH is measured at 25°C using an Oakton 510 series pH meter.

Print Preparation: The inks were applied to a rigid acrylic substrate typical of that used in the inkjet graphics printing industry at 8µm, using a K-Bar applicator (ex. RK Print). The prints were then dried for 20 seconds using a hot air blower. The prints were allowed to stand at room temperature for a further 15 minutes before being tested for solvent resistance. The prints were then heated for 2 minutes at 50 and 70°C and tested for solvent resistance.

Water Resistance: The water resistance of the prints was determined by rubbing the print with a cotton wool bud soaked in water. The number of double rubs required to remove or disrupt the print was the recorded; this is a test well known in the industry.

The invention is further described by the following non-limiting examples which further illustrate the invention, and are not intended, nor should they be interpreted to, limit the scope of the invention.

### Materials

- Daotan 6425: a conventional OH-PUD, with a solid content of about 40% and a OH value of about 55 mgKOH/g and a weight average molecular weight (M_{w}) of around 10,000 Daltons (ex. Allnex).
- Daotan 7000: a conventional OH-PUD, with a solid content of about 40% and a OH value of about 170 mgKOH/g (ex. Allnex) and a M_{w} of around 5,000 Daltons (ex. Allnex).
- Daotan 6460: a conventional OH-PUD, with a solid content of about 40% and a OH value of about 25 mgKOH/g (ex. Allnex) and a M_{w} of greater than 50,000 Daltons (ex. Allnex).
- Daotan 7063: a conventional PUD, with a solid content of about 40% and a OH value of less than 5 mgKOH/g (ex. Allnex) and a M_{w} of greater than 50,000 Daltons (ex. Allnex).
- Joncryl 8050: an acrylic dispersion with a solid content of 42%. Inks comprising this dispersion as the sole binder are insoluble.
- Tegowet KL245: A surfactant (ex. Evonik).
- Triethanolamine
- Propylene glycol: A water soluble co-solvent, with a boiling point of about 188°C and a heat of vaporization of about 880 J/g.
- MMB (3-methoxy-3-methyl-1-butanol); A water soluble co-solvent, with a boiling point of about 174°C and a heat of vaporization of about 384 J/g.
- Cyan Pigment Dispersion A: An aqueous dispersion of cyan 15:3 pigment, comprising about 15% (w/w) pigment, and a polymeric anionic dispersant.
- Cyan Pigment Dispersion B: An aqueous dispersion of cyan 15:3 pigment, comprising about 20% (w/w) pigment, and further comprising a polymeric non-ionic dispersant and an anionic PUD dispersant.
- Cyan Pigment Dispersion C: An aqueous dispersion of cyan 15:3 pigment, comprising about 20% (w/w) pigment, and a polymeric anionic dispersant.
- Cyan Pigment Dispersion D: An aqueous dispersion of cyan 15:3 pigment, comprising about 20% (w/w) pigment, and further comprising a polymeric dispersant comprising poly(ethylene oxide).
- Magenta Pigment Dispersion A: An aqueous dispersion of a mixture of pigment violet 19 and pigment red 202, comprising about 20% (w/w) pigment, and a polymeric anionic dispersant.
- Carbodilite SV-02: A polycarbodiimide crosslinker (ex. Nishinbo Chemicals).

Table 1 provides the details of the low molecular weight PUDS used in the preparation of aqueous ink compositions suitable for inkjet compositions fulfilling the requirements of the invention.

**Table 1: PUDs used in the Preparation of Aqueous Inks Suitable for Inkjet Printing**

| PUD | Diol² | Neutralising Amine³ | MW (M_{w})¹ Daltons | Approx. OH Value (mgKOH/g (dry) |
|---|---|---|---|---|
| PUD K (Comparative) | PE | DMEA | 10,000 | 15 |
| PUD L (Comparative) | PE | DMEA | 10,000 | 0 |
| PUD Q (Inventive) | PE | DMEA | 8,700 | 30-35 |
| PUD W (Inventive) | PC | DMEA | 14,700 | 30-35 |
| PUD Z (Inventive) | PC | TEA | 14,500 | 30-35 |
| PUD 2425 | PC | DMEA | 15,800 | 30-35 |

| | | | | |
|---|---|---|---|---|
| Notes to Table 1: ¹"Weight average molecular weight for the PUDs was determined by GPC, using a polystyrene calibration and THF as the eluting solvent. ²Diol refers to the prepolymer diol used in the manufacture of the PUD. PE refers to a polyester diol, PC to a polycarbonate diol. ³In the examples here, two different tertiary amines were used to neutralize the carboxylic acid groups of the PUD. DMEA refers to N,N-dimethylethanolamine and TEA refers to triethylamine. | | | | |

The solids content of each of PUDs K to Z and PUD 2425 is 36 to 38 wt%.

Table 2 shows the compositions for a number of different PUDs of various molecular weights and OH values demonstrating the benefits of an inventive composition comprising PUD Q which has a weight average molecular weight of around 8700 and a OH value of between 30 and 35 mgKOH/g.

**Table 2: Ink Examples showing the Benefits of Using a OH-PUD according to the Invention (C denotes comparative examples; I denotes Inventive examples)**

| Example^{A} | C1 | C2 | C3 | C4 | C5 | C6 | I1 |
|---|---|---|---|---|---|---|---|
| PUD | Daotan 7000 | Daotan 6425 | Daotan 6460 | Daotan 7063 | K | L | Q |
| Initial Viscosity (mPa.s) | 5.58 | 5.34 | 6.06 | 5.73 | 8.40 | 6.90 | 6.75 |
| pH | 8.45 | 8.05 | 7.85 | 8.15 | 7.65 | 7.75 | 7.50 |
| Viscosity¹ (mPa.s) | 5.94 | 5.43 | 5.94 | 6.03 | 7.11³ | 6.51³ | 6.93 |
| Ink Resolubility (Solution A) | Highly Resoluble | Highly Resoluble | Partially Resoluble | Insoluble | Resoluble | Resoluble | Highly Resoluble |
| Ink Resolubility (Solution B) | Highly Resoluble | Highly Resoluble | Insoluble | Insoluble | Slowly Resoluble | Insoluble | Highly Resoluble |
| Ink Resolubility (Solution C) | Partially Resoluble | Insoluble | Insoluble | Insoluble | Insoluble | Insoluble | Insoluble |

| | Print Properties (Water resistance rubs)⁴ | | | | | | |
|---|---|---|---|---|---|---|---|
| 2 mins at 70°C | 2 | 25 | 30 | 30 | 90 | 80 | 60 |

| | Print Properties (Tackiness) | | | | | | |
|---|---|---|---|---|---|---|---|
| Tackiness Rating² | Tacky | Sl. Tacky | Sl.Tacky | Sl.Tacky | Sl.Tacky | Sl.Tacky | Sl.Tacky |

| | | | | | | | |
|---|---|---|---|---|---|---|---|
| **Notes to Table 2:** ^{A}Composition of inks in Table 2: 32.3% (w/w) deionized water; 25.0% (w/w) propylene glycol; 0.2% (w/w) Tegowet KL245; 30.0% (w/w) of the polymer (PUD) dispersion; and 12.5% (w/w) of Cyan Pigment Dispersion A. ¹This viscosity was taken after the ink had been stored at 50°C for seven days. ²The tackiness rating was determined on the prints dried at 70°C. It involved depressing a finger onto the print surface and qualitatively assessing how tacky the print was. The rating system used was very tacky, tacky, slightly tacky (Sl. Tacky) and Tack-Free. Slightly tacky and tack-free are both considered a pass, however, tack-free is more advantageous. ³The inks comprising PUDs K and L showed a significant change in viscosity (≥ 10% change) during the stability tests, and also showed signs of phase separation, another indicator of poor stability. For the purposes of the present application a ≥ 5% increase in viscosity is considered undesirable, and a ≥ 10% viscosity change is considered unstable. ⁴Resistance to 30+ rubs (after 2 mins at 70°C) is considered a pass, though resistance to a higher number of rubs (e.g. 40+ or 50+) is desirable. | | | | | | | |

Inventive Example I1 shows that that an ink composition using a PUD within the limits of the invention produce an ink with good stability, excellent resolubility into the aqueous solutions comprising a base, yet producing prints with good water resistance. Inks prepared with PUDs having higher OH values, Comparative Examples C1 and C2, produced prints with significantly poorer water resistance. The inks using PUDs with weight average molecular weights of greater than 50,000 Daltons (C3 and C4) exhibited poor resolubility. Inks comprising PUDs of low M_{w} and OH values of 15 or less produced inks with poor stability, C5 and C6.

Tables 3 and 4 show further inventive ink examples, exploring PUDs falling within the limits of the invention and the impact of the pigment dispersion choice.

**Table 3: Inks Prepared with PUD W and Different Pigment Dispersions**

| Example^{A} | I2 | I3 | I4 | I5 | I6 |
|---|---|---|---|---|---|
| PUD | W | W | W | W | W |
| Pigment Dispersion | Cyan B | Cyan A | Cyan C | Cyan D | Magenta A |
| Viscosity (mPa.s) | 6.39 | 6.51 | 6.18 | 6.48 | 5.91 |
| pH | 7.89 | 7.95 | 8.35 | 7.80 | 8.00 |
| Viscosity¹ (mPa.s) | 6.42 | 6.48 | 6.21 | 6.42 | 5.91 |
| Viscosity change (%) | 0.5 | 0.5 | 0.5 | 0.9 | 0.0 |
| Ink Resolubility (Solution A) | Highly Resoluble | Highly Resoluble | Highly Resoluble | Highly Resoluble | Highly Resoluble |
| Ink Resolubility (Solution B) | Resoluble | Resoluble | Resoluble | Resoluble | Resoluble |
| Ink Resolubility (Solution C) | Insoluble | Insoluble | Insoluble | Partially Resoluble | Insoluble |

| | Print Properties (Water resistance rubs)⁴ | | | | |
|---|---|---|---|---|---|
| 2 mins at 70°C | 60 | 100+ | 100+ | 16 | 100+ |

| Print Properties (Tackiness) | | | | | |
|---|---|---|---|---|---|
| Tackiness Rating² | Tack-Free | Tack-Free | Tack-Free | Very Tacky | Tack-Free |

| | | | | | |
|---|---|---|---|---|---|
| Notes to Table 3: ^{A}The compositions used here were prepared in the same manner as described for Table 2. The one exception was for example 13, where the amount of pigment dispersion used was 16.7% to ensure the same amount of pigment (2.5% (w/w)) was used throughout. *The reduced water resistance of Example 5 may result from the presence of a non-ionic dispersant in Cyan D pigment dispersion. | | | | | |

Table 3 shows the benefits of using pigment dispersions where anionic polymeric dispersants have been used in their manufacture. Comparative Example C5, based on a cyan dispersion using a non-ionic polyurethane as a dispersant produced prints with poor water resistance which were also very tacky after drying. Note that although anionic polymeric pigment dispersants are advantageous, non-ionic dispersants can also be used as long as they comprise ≤ 50% of the total dispersant content. The other pigment dispersions, especially those based solely on polymeric anionic dispersants (I3, I4 and I6) produced prints with excellent water resistance. A further observation is that PUD W, using a polycarbonate diol in its manufacture, enabled inks producing prints with noticeably lower tack than PUD Q, which comprised a polyester diol in its manufacture.

Table 4 shows the performance for inks comprising PUDs W, Z and 2425. In this case, the ink compositions comprised 34.8% deionized water, 25.0% water-soluble organic solvent, 0.2% Tegowet KL245, 25.0% of each PUD and 15.0% of pigment dispersion C. Also encompassed within Table 4 is an ink comprising the solvent MMB, thereby exemplifying an optional embodiment of the invention

**Table 4: Inks Prepared with PUDs W and Z**

| Example^{A} | I7 | I8 | I9 |
|---|---|---|---|
| PUD | W | Z | W |
| Pigment Dispersion | Cyan C | Cyan C | Cyan C |
| Solvent | PG | PG | MMB |
| Viscosity (mPa.s) | 5.07 | 4.86 | 4.83 |
| pH | 8.45 | 8.65 | 8.55 |
| Viscosity¹ (mPa.s) | 5.04 | 4.95 | - |
| Viscosity change (%) | 0.6 | 1.9 | Not tested |
| Ink Resolubility (Solution A) | Highly Resoluble | Highly Resoluble | Resoluble |
| Ink Resolubility (Solution C) | Insoluble | Insoluble | Insoluble |
| 15 mins at Room Temperature | 8 | 15 | 12 |
| 2 mins at 50°C | 50 | 80 | 80 |
| 2 mins at 70°C | 100+ | 100+ | 100+ |
| Tackiness Rating² | Tack-Free | Tack-Free | Tack-Free |

| | | | |
|---|---|---|---|
| ¹This viscosity was taken after the ink had been stored at 50°C for seven days. ²The tackiness rating was determined on the prints dried at 70°C. It involved depressing a finger onto the print surface and qualitatively assessing how tacky the print was. The rating system used was very tacky, tacky, slightly tacky (Sl. Tacky) and Tack-Free. Slightly tacky and tack-free are both considered a pass, however, tack-free is more advantageous. ⁴Resistance to 30+ rubs (after 2 mins at 70°C) is considered a pass, though resistance to a higher number of rubs (e.g. 40+ or 50+) is desirable. | | | |

Table 4 shows that when a PUD is neutralized with the more volatile tertiary amine, triethylamine, it produces an ink (I8) which dries more quickly than for an ink comprising a PUD neutralized with N,N-dimethylethanolamine (I7). This is shown in the test for water-resistance rubs. Though both Examples I7 and I8 attain 100+ rubs after 2 mins at 70°C, I8 exhibits better water rub resistance at 15 mins at Room Temperature and 2 mins at 50°C, indicating faster drying.

Table 5 shows how inks can be prepared by blending PUDs of the invention with an acrylic dispersion, Joncryl 8050. These ink compositions follow those of I2, with parts of the PUD W component being replaced with Joncryl 8050.

**Table 5: Inks Comprising Blends of PUD W and Joncryl 8050**

| Example | I2 | I10 | III | I12 |
|---|---|---|---|---|
| % (w/w) PUD W | 30.0 | 25.0 | 20.0 | 15.0 |
| % (w/w) Joncryl 8050 | 0 | 5.0 | 10.0 | 15.0 |
| Pigment Dispersion | Cyan B | Cyan B | Cyan B | Cyan B |
| Viscosity (mPa.s) | 6.39 | 6.18 | 6.12 | 6.00 |
| pH | 7.89 | 8.20 | 8.30 | 8.35 |
| Ink Resolubility (Solution A) | Highly Resoluble | Resoluble | Slowly Resoluble | Partially Resoluble |
| Ink Resolubility (Solution C) | Insoluble | Insoluble | Insoluble | Insoluble |

| | Print Properties (Water resistance rubs)⁴ | | | |
|---|---|---|---|---|
| 2 mins at 70°C | 60 | 65 | 100+ | 100+ |

| Print Properties (Tackiness) | | | | |
|---|---|---|---|---|
| Tackiness Rating | Tack-Free | Tack-Free | Tack-Free | Tack-Free |

Table 5 illustrates inks comprising blends of PUDs (according to the invention) with an acrylic dispersion, thereby fulfilling a further optional embodiment of the invention. The examples in Table 5 show that where such blends of PUD and a second polymer dispersion are used to prepare inks, there can be a negative impact on the ink resolubility, although the water resistance of prints can be further enhanced. However, contrariwise, the resolubility of inks comprising conventional styrene(meth)acrylic dispersions or conventional PUDs of low OH value and high molecular weights might be enhanced by incorporating the PUDs of the invention.

Table 6 shows how inks can be prepared with various concentrations of a PUD and pigment dispersion, PUD Z and magenta dispersion A respectively. In all cases, 25.0% (w/w) of propylene glycol was used along with 0.2% Tegowet KL245. The balance of each ink example was made up with deionized water.

**Table 6: Inks Exploring different PUD:Pigment Ratios**

| Example | I13 | I14 | I15 | I16 | I17 | I18 | I19 | 120 |
|---|---|---|---|---|---|---|---|---|
| % (w/w) PUD Z | 25.0 | 25.0 | 25.0 | 25.0 | 25.0 | 20.0 | 15.0 | 15.0 |
| % (w/w) Magenta Dispersion A | 10.0 | 12.5 | 15.0 | 20.0 | 25.0 | 15.0 | 15.0 | 20.0 |
| PUD/Pigment (% (w/w) dry matter) | 10/2 | 10/2.5 | 10/3 | 10/4 | 10/5 | 8/3 | 6/3 | 6/4 |
| Viscosity (mPa.s) | 4.29 | 4.62 | 4.74 | 5.28 | 5.79 | 4.14 | 4.20 | 3.84 |
| pH | 7.80 | 7.85 | 7.95 | 8.05 | 8.10 | 8.00 | 8.15 | 8.20 |
| Ink Resolubility (Solution A) | Highly Resoluble | Highly Resoluble | Highly Resoluble | Highly Resoluble | Highly Resoluble | Highly Resoluble | Highly Resoluble | Highly Resoluble |

| | Print Properties (Water resistance rubs)⁴ | | | | | | | |
|---|---|---|---|---|---|---|---|---|
| 2 mins at 70°C | 100+ | 100+ | 100+ | 100+ | 100+ | 100+ | 100+ | 100+ |

| Print Properties (Tackiness) | | | | | | | | |
|---|---|---|---|---|---|---|---|---|
| Tackiness Rating | Tack-Free | Tack-Free | Tack-Free | Tack-Free | Tack-Free | Tack-Free | Tack-Free | Tack-Free |

The results in Table 6 show how it is possible to achieve inks having an excellent balance of resolubility and print resistance. This balance of properties is highly desirable.

An ink comprising 25% (w/w) of PUD W and 45% of cyan pigment dispersion A was jetted reliably from a Samba G3L (Fujifilm) printhead with an open time in excess of 30 minutes without any nozzle dropouts or significant start-up issues. Indeed, this ink showed superior jetting characteristics to a comparable ink prepared with Daotan 7000.

## Claims

1. An inkjet composition comprising a polyurethane dispersion having a weight average molecular weight of 5,000 to 25,000 Daltons; and a hydroxyl value, based on the dry polymer weight, of 15 to 50mgKOH/g; wherein the polyurethane of the polyurethane dispersion does not comprise ketone or aldehyde groups at the chain ends.

2. The composition according to claim 1, wherein:
I) the hydroxyl value of the polyurethane dispersion is 16 to 50mg KOH/g, 20 to 50 mg KOH/g, or 22 to 40 mg KOH/g, or 25 to 35 mg KOH/g, or 30 to 35 mg KOH/g; and/or
II) the composition is substantially free of adipic dihydrazide; and/or
III) the weight average molecular weight of the polyurethane dispersion is 5,000 to 20,000 Daltons, or 8,000 to 16,000 Daltons; or the weight average molecular weight of the polyurethane dispersion is 10,000 to 25,000 Daltons, or 15,000 to 25,000 Daltons, or 20,000 to 25,000 Da; and/or
IV) the polyurethane dispersion is obtained from a diol selected from the group consisting of a polyester diol, a polycarbonate diol, and combinations thereof, optionally wherein the polyurethane dispersion is obtained from a polycarbonate diol; and/or
V) the polyurethane dispersion is anionically stabilized, optionally wherein the polyurethane dispersion is derived from a carboxylic acid-containing diol selected from the group consisting of dimethylol propionic acid, sulfonic acid containing diols, isophthalic acid containing diols, and combinations thereof; and/or
VI) non-ionic polyurethane dispersions make up 30wt% or less of the total polyurethane dispersions present, based on the total dry weight of the polyurethane dispersions, or 15wt% or less of the total polyurethane dispersions present, based on the total dry weight of the polyurethane dispersions.

3. The composition according to any preceding claim, wherein the polyurethane dispersion is neutralized with a tertiary amine having a boiling point of less than 150°C; optionally:
I) wherein the tertiary amine is selected from the group consisting of N,N-dimethylethanolamine, triethylamine, and combinations thereof; or
II) wherein the tertiary amine is not triethylamine; and/or
III) wherein the tertiary amine is N,N-dimethylethanolamine.

4. The composition according to any preceding claim, wherein:
I) the polyurethane dispersion comprises at least one terminal OH group; and/or
II) the polyurethane dispersion has an acid value of at least 10 mgKOH/g, or at least 20 mgKOH/g; and/or
III) the polyurethane dispersion comprises at least one urea linkage, or at least two urea linkages, or at least four urea linkages; and/or
IV) the average particle size of the polyurethane of the polyurethane dispersion is less than 250nm, or less than 100nm.

5. The composition according to any preceding claim, further comprising a pigment dispersion, wherein the pigment dispersion comprises an anionic polymeric dispersant; optionally wherein the pigment dispersion comprises at least 70wt% anionic pigment dispersants relative to the total pigment dispersants present in the composition; optionally:
I) wherein the pigment dispersion comprises a dispersant comprising poly(ethylene oxide) groups, and wherein said dispersant comprising poly(ethylene oxide) groups is present in ≤50% (w/w) of the total amount of dispersants in the pigment dispersion; and/or
II) wherein the pigment dispersion comprises polymers selected from the group consisting of styrene(meth)acrylate-(meth)acrylic acid copolymers, copolymers of styrene and maleic anhydride and/or acid, and combinations thereof.

6. The composition according to any preceding claim,
I) comprising 30wt% or less of non-ionic dispersants, or 20wt% or less, or 10wt% or less, or 5wt% or less, or 2wt% or less of non-ionic dispersants, based on the dry weight of the dispersant; optionally wherein the composition is substantially free of non-ionic dispersants.

7. The composition according to any preceding claim:
I) further comprising a water-soluble organic solvent having a boiling point of less than 200°C; and/or
II) wherein the composition comprises less than 40% (w/w) of total water-soluble organic solvents, or less than 30% (w/w) of total water-soluble organic solvents; and/or
III) wherein the composition comprises less than 10% (w/w) of water-soluble organic solvents having boiling points greater than 200 °C, or less than 5% (w/w) of water-soluble organic solvents having boiling points greater than 200 °C.

8. The composition according to any of claim 7, wherein the water-soluble organic solvent has a heat of vaporization of less than 500 J g⁻¹, optionally wherein the solvent is 3-methoxy-3-methyl-1-butanol.

9. The composition according to any preceding claim, comprising 25wt% or less of propylene glycol.

10. The composition according to claims 8 or 9, wherein the water-soluble organic solvent is selected from the group consisting of a polyol, an alkylene glycol, an alkylene glycol ether, an ether acetate, and combinations thereof.

11. The composition according to any preceding claim,
I) further comprising one or more additional polyurethane dispersions; and/or II) further comprising a styrene-(meth)acrylate dispersion.

12. The composition according to any preceding claim, comprising 10wt% or less of a conventional crosslinker, or 5wt% or less of a conventional crosslinker, or wherein the composition is substantially free of conventional crosslinker; and/or further comprising a conventional crosslinker; optionally wherein the conventional crosslinker is selected from the group consisting of carbodiimides, oxazolines, aziridines, epoxies, amino resins, metal complexes, isocyanates, epoxides, and combinations thereof; optionally wherein the conventional crosslinker is polycarbodiimide.

13. The composition according to any preceding claim, wherein:
I) the composition comprises 2wt% to 40 wt% of polyurethane solids, based on the total dry weight of the composition; and/or
II) the polyurethane dispersion makes up at least 50wt% of the total resins present in the composition, based on the dry weight, or at least 70wt%, at least 80wt%, or at least 90wt% of the total resins present in the composition, based on the dry weight; and/or
III) the composition is an inkjet composition.

14. A method for printing an article, comprising
a) printing the composition of any one of claims 1 to 13 onto a substrate; and
b) drying the composition.

15. The method of claim 14, wherein:
I) the substrate is selected from the group consisting of packaging substrates, metal substrates, textiles, décor laminates, and graphics; optionally wherein the substrate is food packaging; and/or
II) the printing method is selected from the group consisting of inkjet printing, flexographic printing, and gravure printing, optionally wherein the printing method is single-pass or multi-pass inkjet printing; and/or
III) between steps a) and b) the method further comprises the step of pinning the composition to the substrate; and/or
IV) the composition is printed as a surface print and no overprint varnish is then applied.

16. A printed article comprising a substrate and a printed layer derived from the composition of any one of claims 1 to 13.

17. The printed article of claim 16, wherein the substrate is selected from the group consisting of paper, vinyl, acrylic, polystyrene, polycarbonate, polyester films, polypropylene films, nylon films, cellulose acetate films, polyethylene films, aluminum foils, and metal sheets and rolls; and/or further comprising a primer between the substrate and the printed layer.

18. A method of preparing an aqueous composition, comprising
a) providing a polyurethane dispersion having a weight average molecular weight of 5,000 to 25,000 Daltons; and a hydroxyl value, based on the dry polymer weight, of 15 to 50 mgKOH/g; wherein the polyurethane of the polyurethane dispersion does not comprise ketone or aldehyde groups at the chain ends; and
b) formulating the polyurethane dispersion into a composition;
optionally wherein the aqueous composition is according to any of claims 1 to 13.

19. A method of resolubilizing an ink, comprising the steps of:
a) providing a dried ink obtained from the composition as defined in any of claims 1 to 13; and
b) resolubilizing the ink;
optionally wherein:
I) the dried ink of part a) is disposed on a print nozzle; and/or
II) step b) is performed by contacting the dried ink with a flushing solution; optionally wherein flushing solution is an aqueous solution comprising a base, optionally wherein the base is an amine; and/or
III) the dried ink is obtained from a method of printing comprising the step of drying the ink for 1 hour at 40 °C or above.

20. Use of a composition according to any of claims 1 to 13 for reducing blockages in a printhead used in printing.

## Patentansprüche

1. Tintenstrahlzusammensetzung umfassend eine Polyurethandispersion mit einem gewichtsmittleren Molekulargewicht von 5.000 bis 25.000 Dalton und einer Hydroxyzahl, bezogen auf das Trockenpolymergewicht, von 15 bis 50 mgKOH/g; wobei das Polyurethan der Polyurethandispersion an den Kettenenden keine Keton-oder Aldehydgruppen umfasst.

2. Zusammensetzung nach Anspruch 1, wobei:
I) die Hydroxyzahl der Polyurethandispersion 16 bis 50 mg KOH/g, 20 bis 50 mg KOH/g oder 22 bis 40 mg KOH/g oder 25 bis 35 mg KOH/g oder 30 bis 35 mg KOH/g beträgt; und/oder
II) die Zusammensetzung im Wesentlichen frei von Adipinsäuredihydrazid ist; und/oder
III) das gewichtsmittlere Molekulargewicht der Polyurethandispersion 5.000 bis 20.000 Dalton oder 8.000 bis 16.000 Dalton beträgt; oder das gewichtsmittlere Molekulargewicht der Polyurethandispersion 10.000 bis 25.000 Dalton oder 15.000 bis 25.000 Dalton oder 20.000 bis 25.000 Da beträgt; und/oder
IV) die Polyurethandispersion aus einem Diol ausgewählt aus der Gruppe bestehend aus einem Polyesterdiol, einem Polycarbonatdiol und Kombinationen erhalten ist, wobei die Polyurethandispersion gegebenenfalls aus einem Polycarbonatdiol erhalten ist; und/oder
V) die Polyurethandispersion anionisch stabilisiert ist, wobei die Polyurethandispersion gegebenenfalls von einem carbonsäurehaltigen Diol ausgewählt aus aus der Gruppe bestehend aus Dimethylolpropionsäure, Sulfonsäure-enthaltenden Diolen, Isophthalsäureenthaltenden Diolen und Kombinationen davon abgeleitet ist; und/oder
VI) nichtionische Polyurethandispersionen 30 Gew.-% oder weniger der gesamten vorhandenen Polyurethandispersionen, bezogen auf das Gesamttrockengewicht der Polyurethandispersionen, oder 15 Gew.-% oder weniger der gesamten vorhandenen Polyurethandispersionen, bezogen auf das Gesamttrockengewicht der Polyurethandispersionen, ausmachen.

3. Zusammensetzung nach einem der vorstehenden Ansprüche, wobei die Polyurethandispersion mit einem tertiären Amin mit einem Siedepunkt von weniger als 150 °C neutralisiert ist; gegebenenfalls:
I) wobei das tertiäre Amin ausgewählt ist aus der Gruppe bestehend aus N,N-Dimethylethanolamin, Triethylamin und Kombinationen davon; oder
II) wobei das tertiäre Amin nicht Triethylamin ist; und/oder
III) wobei das tertiäre Amin N,N-Dimethylethanolamin ist.

4. Zusammensetzung nach einem der vorstehenden Ansprüche, wobei:
I) die Polyurethandispersion wenigstens eine endständige OH-Gruppe umfasst; und/oder
II) die Polyurethandispersion eine Säurezahl von wenigstens 10 mgKOH/g oder wenigstens 20 mgKOH/g aufweist; und/oder
III) die Polyurethandispersion wenigstens eine Harnstoff-Verknüpfung oder wenigstens zwei Harnstoff-Verknüpfungen oder wenigstens vier Harnstoff-Verknüpfungen umfasst; und/oder
IV) die mittlere Partikelgröße des Polyurethans der Polyurethandispersion weniger als 250 nm oder weniger als 100 nm beträgt.

5. Zusammensetzung nach einem der vorstehenden Ansprüche, ferner umfassend eine Pigmentdispersion, wobei die Pigmentdispersion ein anionisches polymeres Dispergiermittel umfasst; gegebenenfalls wobei die Pigmentdispersion wenigstens 70 Gew.-% anionische Pigmentdispergiermittel bezogen auf die gesamten in der Zusammensetzung vorhandenen Pigmentdispergiermittel umfasst; gegebenenfalls:
I) wobei die Pigmentdispersion ein Dispergiermittel umfasst, das Poly(ethylenoxid)gruppen umfasst, und wobei das Dispergiermittel, das Poly(ethylenoxid)gruppen umfasst, in ≤50 % (w/w) der Gesamtmenge an Dispergiermitteln in der Pigmentdispersion vorhanden ist; und/oder
II) wobei die Pigmentdispersion Polymere ausgewählt aus der Gruppe bestehend aus Styrol(meth)acrylat-(Meth)acrylsäure-Copolymeren, Copolymeren von Styrol und Maleinsäureanhydrid und/oder -säure und Kombinationen davon umfasst.

6. Zusammensetzung nach einem der vorstehenden Ansprüche,
I) umfassend 30 Gew.-% oder weniger an nichtionischen Dispergiermitteln oder 20 Gew.-% oder weniger oder 10 Gew.-% oder weniger oder 5 Gew.-% oder weniger oder 2 Gew.-% oder weniger an nichtionischen Dispergiermitteln, bezogen auf das Trockengewicht des Dispergiermittels; gegebenenfalls wobei die Zusammensetzung im Wesentlichen frei von nichtionischen Dispergiermitteln ist.

7. Zusammensetzung nach einem der vorstehenden Ansprüche:
I) ferner umfassend ein wasserlösliches organisches Lösungsmittel mit einem Siedepunkt von weniger als 200 °C; und/oder
II) wobei die Zusammensetzung weniger als 40 % (w/w) an gesamten wasserlöslichen organischen Lösungsmitteln oder weniger als 30 % (w/w) an gesamten wasserlöslichen organischen Lösungsmitteln umfasst; und/oder
III) wobei die Zusammensetzung weniger als 10 % (w/w) an wasserlöslichen organischen Lösungsmitteln mit Siedepunkten von höher als 200 °C oder weniger als 5 % (w/w) an wasserlöslichen organischen Lösungsmitteln mit Siedepunkten von höher als 200 °C umfasst.

8. Zusammensetzung nach einem der Ansprüche 7, wobei das wasserlösliche organische Lösungsmittel eine Verdampfungswärme von weniger als 500 J g⁻¹ aufweist, wobei das Lösungsmittel gegebenenfalls 3-Methoxy-3-methyl-1-butanol ist.

9. Zusammensetzung nach einem der vorstehenden Ansprüche, umfassend 25 Gew.-% oder weniger Propylenglycol.

10. Zusammensetzung nach Anspruch 8 oder 9, wobei das wasserlösliche organische Lösungsmittel ausgewählt ist aus der Gruppe bestehend aus einem Polyol, einem Alkylenglycol, einem Alkylenglycolether, einem Etheracetat und Kombinationen davon.

11. Zusammensetzung nach einem der vorstehenden Ansprüche,
I) ferner umfassend eine oder mehrere zusätzliche Polyurethandispersionen; und/oder II) ferner umfassend eine Styrol-(Meth)acrylat-Dispersion.

12. Zusammensetzung nach einem der vorstehenden Ansprüche, umfassend 10 Gew.-% oder weniger an einem herkömmlichen Vernetzer oder 5 Gew.-% oder weniger an einem herkömmlichen Vernetzer, oder wobei die Zusammensetzung im Wesentlichen frei von herkömmlichem Vernetzer ist; und/oder ferner umfassend einen herkömmlichen Vernetzer; gegebenenfalls wobei der herkömmliche Vernetzer ausgewählt ist aus der Gruppe bestehend aus Carbodiimiden, Oxazolinen, Aziridinen, Epoxiden, Aminoplastharzen, Metallkomplexen, Isocyanaten, Epoxiden und Kombinationen davon; gegebenenfalls wobei der herkömmliche Vernetzer Polycarbodiimid ist.

13. Zusammensetzung nach einem der vorstehenden Ansprüche, wobei:
I) die Zusammensetzung 2 Gew.-% bis 40 Gew.-% Polyurethanfeststoffe, bezogen auf das Gesamttrockengewicht der Zusammensetzung, umfasst; und/oder
II) die Polyurethandispersion wenigstens 50 Gew.-% der gesamten in der Zusammensetzung vorhandenen Harze, bezogen auf das Trockengewicht, oder wenigstens 70 Gew.-%, wenigstens 80 Gew.-% oder wenigstens 90 Gew.-% der gesamten in der Zusammensetzung vorhandenen Harze, bezogen auf das Trockengewicht, ausmacht; und/oder III) die Zusammensetzung eine Tintenstrahlzusammensetzung ist.

14. Verfahren zum Bedrucken eines Gegenstands, umfassend
a) Drucken der Zusammensetzung nach einem der Ansprüche 1 bis 13 auf ein Substrat; und
b) Trocknen der Zusammensetzung.

15. Verfahren nach Anspruch 14, wobei:
I) das Substrat ausgewählt ist aus der Gruppe bestehend aus Verpackungssubstraten, Metallsubstraten, Textilien, Dekorlaminaten und Grafiken; gegebenenfalls wobei das Substrat eine Lebensmittelverpackung ist; und/oder
II) das Druckverfahren ausgewählt ist aus der Gruppe bestehend aus Tintenstrahldruck, Flexodruck und Tiefdruck, wobei das Druckverfahren gegebenenfalls Single-Pass- oder Multi-Pass-Tintenstrahldruck ist; und/oder
III) das Verfahren zwischen den Schritten a) und b) ferner den Schritt des Fixierens der Zusammensetzung an das Substrat umfasst; und/oder
IV) die Zusammensetzung als Oberflächendruck gedruckt und danach kein Überdrucklack aufgebracht wird.

16. Bedruckter Gegenstand umfassend ein Substrat und eine Druckschicht, die von der Zusammensetzung nach einem der Ansprüche 1 bis 13 abgeleitet ist.

17. Bedruckter Gegenstand nach Anspruch 16, wobei das Substrat ausgewählt ist aus der Gruppe bestehend aus Papier, Vinyl, Acryl, Polystyrol, Polycarbonat, Polyesterfolien, Polypropylenfolien, Nylonfolien, Celluloseacetatfolien, Polyethylenfolien, Aluminiumfolien und Metallblechen und -rollen; und/oder ferner umfassend eine Grundierung zwischen dem Substrat und der Druckschicht.

18. Verfahren zur Herstellung einer wässrigen Zusammensetzung, umfassend
a) Bereitstellen einer Polyurethandispersion mit einem gewichtsmittleren Molekulargewicht von 5.000 bis 25.000 Dalton und einer Hydroxyzahl, bezogen auf das Trockenpolymergewicht, von 15 bis 50 mgKOH/g; wobei das Polyurethan der Polyurethandispersion an den Kettenenden keine Keton- oder Aldehydgruppen umfasst; und
b) Formulieren der Polyurethandispersion zu einer Zusammensetzung;
gegebenenfalls wobei die wässrige Zusammensetzung nach einem der Ansprüche 1 bis 13 ist.

19. Verfahren zum Wiederauflösen einer Tinte, umfassend die Schritte:
a) Bereitstellen einer getrockneten Tinte, die aus der Zusammensetzung nach einem der Ansprüche 1 bis 13 erhalten ist; und
b) Wiederauflösen der Tinte;
gegebenenfalls wobei:
I) die getrocknete Tinte von Teil a) auf einer Druckdüse angeordnet ist; und/oder
II) Schritt b) durch Inkontaktbringen der getrockneten Tinte mit einer Spüllösung durchgeführt wird; gegebenenfalls wobei die Spüllösung eine wässrige Lösung ist, die eine Base umfasst, gegebenenfalls wobei die Base ein Amin ist; und/oder
III) die getrocknete Tinte aus einem Druckverfahren erhalten ist, das den Schritt des Trocknens der Tinte für 1 Stunde bei 40 °C oder darüber umfasst.

20. Verwendung einer Zusammensetzung nach einem der Ansprüche 1 bis 13 zum Verringern von Blockierungen in einem zum Drucken verwendeten Druckkopf.

## Revendications

1. Composition pour jet d'encre comprenant une dispersion de polyuréthane ayant un poids moléculaire moyen en poids de 5 000 à 25 000 Daltons ; et un indice d'hydroxyle, basé sur le poids sec du polymère, de 15 à 50 mg de KOH/g ; dans laquelle le polyuréthane de la dispersion de polyuréthane ne comprend pas de groupes cétone ou aldéhyde aux extrémités de chaîne.

2. Composition selon la revendication 1, dans laquelle :
I) l'indice d'hydroxyle de la dispersion de polyuréthane est de 16 à 50 mg de KOH/g, 20 à 50 mg de KOH/g, ou de 22 à 40 mg de KOH/g, ou de 25 à 35 mg de KOH/g, ou de 30 à 35 mg de KOH/g ; et/ou
II) la composition est sensiblement exempte de dihydrazide adipique ; et/ou
III) le poids moléculaire moyen en poids de la dispersion de polyuréthane est de 5 000 à 20 000 Daltons, ou de 8 000 à 16 000 Daltons ; ou le poids moléculaire moyen en poids de la dispersion de polyuréthane est de 10 000 à 25 000 Daltons, ou de 15 000 à 25 000 Daltons, ou de 20 000 à 25 000 Da ; et/ou
IV) la dispersion de polyuréthane est obtenue à partir d'un diol choisi dans le groupe constitué par un polyester diol, un polycarbonate diol, et leurs combinaisons, éventuellement dans laquelle la dispersion de polyuréthane est obtenue à partir d'un polycarbonate diol ; et/ou
V) la dispersion de polyuréthane est stabilisée de façon anionique, éventuellement dans laquelle la dispersion de polyuréthane est dérivée d'un diol contenant un acide carboxylique choisi dans le groupe constitué par l'acide diméthylolpropionique, des diols contenant un acide sulfonique, des diols contenant de l'acide isophtalique, et leurs combinaisons ; et/ou
VI) les dispersions non ioniques de polyuréthane représentent 30 % ou moins en poids des dispersions totales de polyuréthane présentes, sur la base du poids sec total des dispersions de polyuréthane, ou 15 % ou moins en poids des dispersions totales de polyuréthane présentes, sur la base du poids sec total des dispersions de polyuréthane.

3. Composition selon l'une quelconque des revendications précédentes, dans laquelle la dispersion de polyuréthane est neutralisée avec une amine tertiaire possédant un point d'ébullition inférieur à 150 °C ; éventuellement :
I) dans laquelle l'amine tertiaire est choisie dans le groupe constitué par la N,N-diméthyléthanolamine, la triéthylamine, et leurs combinaisons ; ou
II) dans laquelle l'amine tertiaire n'est pas la triéthylamine ; et/ou
III) dans laquelle l'amine tertiaire est la N,N-diméthyléthanolamine.

4. Composition selon l'une quelconque des revendications précédentes, dans laquelle :
I) la dispersion de polyuréthane comprend au moins un groupe OH terminal ; et/ou
II) la dispersion de polyuréthane a un indice d'acide d'au moins 10 mg de KOH/g, ou d'au moins 20 mg de KOH/g ; et/ou
III) la dispersion de polyuréthane comprend au moins une liaison urée, ou au moins deux liaisons urée, ou au moins quatre liaisons urée ; et/ou
IV) la taille moyenne de particule du polyuréthane de la dispersion de polyuréthane est inférieure à 250 nm, ou inférieure à 100 nm.

5. Composition selon l'une quelconque des revendications précédentes, comprenant en outre une dispersion de pigment, dans laquelle la dispersion de pigment comprend un dispersant polymérique anionique ; éventuellement dans laquelle la dispersion de pigment comprend au moins 70 % en poids de dispersants de pigments anioniques par rapport aux dispersants de pigments totaux présents dans la composition ; éventuellement :
I) dans laquelle la dispersion de pigment comprend un dispersant comprenant des groupes poly(oxyde d'éthylène), et dans laquelle ledit dispersant comprenant des groupes poly(oxyde d'éthylène) est présent en une quantité ≤ 50 % (p/p) de la quantité totale de dispersants dans la dispersion de pigment ; et/ou
II) dans laquelle la dispersion de pigment comprend des polymères sélectionnés dans le groupe constitué par les copolymères styrène(méth)acrylate-acide (méth)acrylique, les copolymères de styrène et d'anhydride et/ou d'acide maléique, et leurs combinaisons.

6. Composition selon l'une quelconque des revendications précédentes,
I) comprenant 30 % en poids ou moins de dispersants non ioniques, ou 20 % en poids ou moins, ou 10 % en poids ou moins, ou 5 % en poids ou moins, ou 2 % en poids ou moins de dispersants non ioniques, sur la base du poids sec du dispersant ; éventuellement, la composition étant substantiellement exempte de dispersants non ioniques.

7. Composition selon l'une quelconque des revendications précédentes :
I) comprenant en outre un solvant organique hydrosoluble ayant un point d'ébullition inférieur à 200 °C ; et/ou
II) dans laquelle la composition comprend moins de 40 % (p/p) de solvants organiques hydrosolubles totaux, ou moins de 30 % (p/p) de solvants organiques hydrosolubles totaux ; et/ou
III) dans laquelle la composition comprend moins de 10 % (p/p) de solvants organiques hydrosolubles ayant des points d'ébullition supérieurs à 200 °C, ou moins de 5 % (p/p) de solvants organiques hydrosolubles ayant des points d'ébullition supérieurs à 200 °C.

8. Composition selon la revendication 7, dans laquelle le solvant organique hydrosoluble a une chaleur de vaporisation inférieure à 500 J g⁻¹, éventuellement dans laquelle le solvant est le 3-méthoxy-3-méthyl-1-butanol.

9. Composition selon l'une quelconque des revendications précédentes, comprenant 25 % en poids ou moins de propylène glycol.

10. Composition selon la revendication 8 ou 9, dans laquelle le solvant organique hydrosoluble est choisi dans le groupe constitué par un polyol, un alkylène glycol, un éther d'alkylène glycol, un acétate d'éther, et leurs combinaisons.

11. Composition selon l'une quelconque des revendications précédentes,
I) comprenant en outre une ou plusieurs dispersions de polyuréthane supplémentaires ; et/ou II) comprenant en outre une dispersion de styrène-(méth)acrylate.

12. Composition selon l'une quelconque des revendications précédentes, comprenant 10 % en poids ou moins d'un agent de réticulation conventionnel, ou 5 % en poids ou moins d'un agent de réticulation conventionnel, ou dans laquelle la composition est sensiblement exempte d'agent de réticulation conventionnel ; et/ou comprenant en outre un agent de réticulation conventionnel ; éventuellement, dans laquelle l'agent de réticulation conventionnel est choisi dans le groupe constitué par des carbodiimides, des oxazolines, des aziridines, des époxys, des résines amino, des complexes métalliques, des isocyanates, des époxydes, et leurs combinaisons ; éventuellement dans laquelle l'agent de réticulation conventionnel est un polycarbodiimide.

13. Composition selon l'une quelconque des revendications précédentes, dans laquelle :
I) la composition comprend 2 % en poids à 40 % en poids de solides de polyuréthane, sur la base du poids sec total de la composition ; et/ou
II) la dispersion de polyuréthane représente au moins 50 % en poids des résines totales présentes dans la composition, sur la base du poids sec, ou au moins 70 % en poids, au moins 80 % en poids, ou au moins 90 % en poids des résines totales présentes dans la composition, sur la base du poids sec ; et/ou
III) la composition est une composition pour jet d'encre.

14. Procédé pour l'impression d'un article, comprenant
a) l'impression de la composition selon l'une quelconque des revendications 1 à 13 sur un substrat ; et
b) le séchage de la composition.

15. Procédé selon la revendication 14, dans lequel :
I) le substrat est choisi dans le groupe constitué par des substrats d'emballage, des substrats métalliques, des textiles, des stratifiés décoratifs et des graphiques ; éventuellement, dans lequel le substrat est un emballage alimentaire ; et/ou
II) le procédé d'impression est choisi dans le groupe constitué par l'impression à jet d'encre, l'impression flexographique, et l'héliogravure, éventuellement dans lequel le procédé d'impression est une impression par jet d'encre à passage unique ou à plusieurs passages ; et/ou
III) entre les étapes a) et b), le procédé comprend en outre l'étape d'épinglage de la composition au substrat ; et/ou
IV) la composition est imprimée comme une impression de surface et aucun vernis de surimpression n'est ensuite appliqué.

16. Article imprimé comprenant un substrat et une couche imprimée dérivée de la composition selon l'une quelconque des revendications 1 à 13.

17. Article imprimé selon la revendication 16, dans lequel le substrat est choisi dans le groupe constitué par un papier, un vinyle, un acrylique, un polystyrène, un polycarbonate, des films de polyester, des films de polypropylène, des films de nylon, des films d'acétate de cellulose, des films de polyéthylène, des feuilles d'aluminium et des feuilles et des rouleaux métalliques ; et/ou comprenant en outre un apprêt entre le substrat et la couche imprimée.

18. Procédé de préparation d'une composition aqueuse, comprenant
a) la fourniture d'une dispersion de polyuréthane ayant un poids moléculaire moyen en poids de 5 000 à 25 000 Daltons ; et un indice d'hydroxyle, sur la base du poids sec du polymère, de 15 à 50 mg de KOH/g ; dans lequel le polyuréthane de la dispersion de polyuréthane ne comprend pas de groupes cétone ou aldéhyde aux extrémités de chaîne ; et
b) la formulation de la dispersion de polyuréthane en une composition ;
éventuellement, dans lequel la composition aqueuse est selon l'une quelconque des revendications 1 à 13.

19. Procédé de resolubilisation d'une encre, comprenant les étapes de :
a) fourniture d'une encre séchée obtenue à partir de la composition telle que définie dans l'une quelconque des revendications 1 à 13 ; et
b) resolubilisation de l'encre ;
éventuellement dans lequel :
I) l'encre séchée de la partie a) est disposée sur une buse d'impression ; et/ou
II) l'étape b) est effectuée par mise en contact de l'encre séchée avec une solution de rinçage ; éventuellement dans lequel la solution de rinçage est une solution aqueuse comprenant une base, éventuellement la base étant une amine ; et/ou
III) l'encre séchée est obtenue à partir d'un procédé d'impression comprenant l'étape de séchage de l'encre pendant 1 heure à 40 °C ou au-delà.

20. Utilisation d'une composition selon l'une quelconque des revendications 1 à 13 pour réduire les blocages dans une tête d'impression utilisée dans l'impression.
